# EUROPEAN PATENT APPLICATION

(11) **EP 4 834 851 A2**
(43) Date of publication of application: **04.11.2026**
(21) Application number: 26175705.8
(22) Date of filing: 30.04.2026
(51) Int. Cl.: C02F 1/28, B01D 39/20, C02F 1/00, C02F 1/42, C02F 1/68

(54) **FLOW DISTRIBUTOR BAFFLE**

(30) Priority: 30.04.2025 US 202563797616 P
(71) Applicant: Pentair Filtration Solutions, LLC, Hanover Park, IL 60133 (US)
(72) Inventor: FELL, James, Glendale Heights, Illinois (US); MCLEOD, Marcus, Glendale Heights, Illinois (US)
(74) Representative: Viering, Jentschura & Partner mbB Patent- und Rechtsanwälte

(57) **Abstract**

A filter assembly includes a carbon block having a first end, a second end, and a channel extending between the first end and the second end, where the channel has a cross-section. An end cap is affixed to the second end of the carbon block. A flow distributor baffle is positioned within the channel, having a cross-section that is smaller than the cross-section of the channel. The flow distributor baffle can move within the channel between the first end and the second end.

## Description

### CROSS REFERENCE TO RELATED APPLICATIONS

The present application claims priority to U.S. Provisional Application No. 63/797,616 filed April 30, 2025, and entitled "FLOW DISTRIBUTOR BAFFLE," the entire content of which is hereby incorporated by reference in its entirety.

### FIELD OF DISCLOSURE

The present disclosure relates generally to a water purification system. More specifically, the present disclosure relates to a flow distributor for a carbon filter within a water purification system.

### BACKGROUND

Water purification systems are widely used to remove impurities, contaminants, and other substances from water supplied to residential and commercial end users. However, filtered water produced by the water purification systems may still contain various undesired substances. In addition, the water purification systems may not adequately remove chemicals from the water that may affect the water's taste.

Some water purification systems use activated carbon to remove a wide range of contaminants and impurities before the water is provided to the end user. The activated carbon removes undesired substances through a variety of processes, including, but not limited to, mechanical filtration, chemisorption, physisorption, and catalysis. Often, the activated carbon is used in the water purification systems in the form of a carbon block.

However, using activated carbon alone may not achieve the desired removal of the impurities, contaminants, and other substances. Thus, some water purification systems utilize an additional non-dissolving media disposed within the carbon block to improve the purification capabilities of the system. For example, fibrous materials or filter cones may be disposed in the carbon block to remove additional undesired substances from water. However, the use of fibrous materials or filter cones presents various issues. Filter cones increase the complexity of the manufacturing process of the carbon block, and therefore the cost of manufacturing, because the cones must be assembled into the carbon block. In addition, the filter cones may lead to large pressure drops, particularly for carbon block filters having narrow interior flow paths through the filter. On the other hand, fibrous material may compress during use, thereby increasing the pressure drop and restricting the flow within the filter. If the diameter of the flow path through the carbon block is increased to accommodate the use of the fibrous materials or filter cones, water traveling through the carbon block may have a relatively low velocity, which in turn may decrease the overall throughput of the filter.

One alternative to the additional inclusion of filter cones or fibrous material is non-dissolving media provided in the form of beads. Typical beads do not compress under normal water flow conditions and can be implemented without requiring additional machining of the filter. However, the beads often become lodged within components of the carbon block, such as end caps coupled to the carbon block. When the beads become lodged in an end cap, the pressure drop may increase, reducing the flow rate through the carbon block and thereby dramatically reducing the carbon block's performance. In some cases, the beads may completely clog the end cap, thereby preventing water from exiting from the carbon block.

Thus, there is a need to improve the performance of carbon filters, such that there is minimal pressure drop and reduction in flow rate of the water, and any non-dissolving media is prevented from clogging the end cap.

### SUMMARY

The present systems and methods overcome many of the shortcomings and limitations of the prior art devices discussed above. The systems described herein include several instances of a flow distribution baffle that may be used within carbon blocks to help retain a non-dissolving media within the carbon block.

In one aspect, a filter assembly is provided in the form of a carbon block having a first end, a second end, and a channel extending between the two ends. An end cap is coupled to the second end of the carbon block filter, and the channel has a first diameter. A flow distributor baffle having a second diameter is positioned within the channel, and the second diameter is less than the first diameter. In addition, the flow distributor baffle is configured or designed to move within the channel between the first end and the second end.

In some instances, the filter assembly also includes a non-dissolving media positioned within the channel between the flow distributor baffle and the first end of the carbon block. The flow distributor baffle can substantially prevent the non-dissolving media from reaching the second end of the carbon block. In some such instances, the non-dissolving media is provided in the form of phosphate beads.

In certain instances, a non-dissolving media is provided in the form of beads and positioned in the channel, and one or more openings are provided in the flow distributor baffle. The non-dissolving media is imparted with a third diameter, while each of the one or more openings is imparted with a fourth diameter. In some cases, the fourth diameter is smaller than the third diameter.

In some instances, the second diameter of the flow distributor baffle is about 1% to about 99% of the first diameter of the channel.

In certain instances, the second diameter of the flow distributor baffle is no more than about 90% of the first diameter of the channel.

In some instances, the flow distributor baffle includes a first end and a second end. The first end has a first angled surface and a second angled surface. The first angled surface and the second angled surface are each imparted with an angle of about 0° to about 89.5°. In some such instances, the flow distributor baffle is positioned such that the first flow distributor end is positioned closer to the end cap than the second flow distributor end.

In certain instances, the end cap of the filter assembly further includes a base and an opening, and the base is coupled to the second end of the carbon block. The opening is in fluid communication with the channel and an outlet of the filter assembly. Filtered water generated by the carbon block is provided to the opening of the end cap.

In another aspect, a water purification system is provided in the form of a water filter, an end cap, a baffle, and a non-dissolving media. The water filter may include a body having a sidewall, a first end, and a second end, in which the sidewall defines a channel that extends through the water filter from the first end to the second end. The end cap is coupled to the second end of the water filter and the baffle is positioned in the channel. In addition, the non-dissolving media is positioned within the channel between the first end and the baffle.

In some instances, the baffle has a first diameter, and the channel has a second diameter that is larger than the first diameter. The first diameter and the second diameter define a gap between the baffle and the channel, and the gap is imparted with a value of about 1 millimeter to about 10 millimeters. In some such instances, the baffle gap is determined when the baffle is positioned at a center of the channel.

In certain instances, the baffle is configured or designed to move between the first end and the second end of the water filter.

In some instances, the water filter is imparted with a first length and the channel of the water filter is imparted with a first diameter. In addition, the baffle is imparted with a second length and a second diameter. The first length of the water filter is greater than the second length of the baffle. In addition, the second length of the baffle is greater than a value of a square root of a difference of the first diameter of the channel and the second diameter of the baffle.

In certain instances, the baffle further includes a baffle sidewall having a first baffle end and a second baffle end, a bore defined by the baffle sidewall and extending through the baffle from the first baffle end to the second baffle end, and one or more openings positioned at the second baffle end of the baffle.

In some instances, the baffle includes one or more baffle openings configured or designed to prevent the non-dissolving media from passing through the baffle.

In another aspect, a method of purifying water comprises placing a baffle into a channel of a carbon block, in which the carbon block includes a first end and a second end, adding a non-dissolving media into the channel, and positioning the baffle downstream of the non-dissolving media. The method further includes directing water into the carbon block, such that the water passes through the carbon block and into the channel. The method also includes passing the water through the non-dissolving media to produce a filtered water. The method further includes passing the filtered water through the baffle and discharging the filtered water from the second end of the carbon block.

In some instances, the non-dissolving media is provided in the form of beads imparted with a first diameter. In some such instances, the baffle comprises one or more baffle openings each imparted with a second diameter that is smaller than the first diameter.

In some cases, the non-dissolving media is provided in the form of phosphate beads, and wherein passing water through the non-dissolving media results in removal and sequestration of calcium and magnesium ions from the water.

In certain instances, the method further comprises preventing the non-dissolving media from flowing out of the second end of the carbon block.

In some cases, the water includes a first concentration of phosphate ions, the filtered water includes a second concentration of phosphate ions, and the second concentration of phosphate ions is greater than the first concentration of phosphate ions.

In some instances, the method further comprises filtering a component from the water stream, the component selected from the group consisting of heavy metals, hardness-imparting compounds or ions, chlorine, chlorine-containing compounds, dissolved particles, and combinations thereof.

These and other aspects and advantages of the present disclosure will become apparent to those skilled in the art after considering the following detailed description in connection with the accompanying drawings.

### BRIEF DESCRIPTION OF THE DRAWINGS

FIG. 1 is a schematic diagram of a home water system including a water filtration device;
FIG. 2 is a front elevation view of a water purification system including a carbon filtration device constructed according to the teachings herein;
FIG. 3A is an isometric top view of a carbon filtration assembly of the carbon filtration device of FIG. 2;
FIG. 3B is a top plan view of the carbon filtration assembly of FIG. 3A;
FIG. 4 is a schematic representation of a horizontal cross-sectional view of a carbon block of the carbon filtration assembly of FIG. 3A, the carbon block including a flow distribution baffle positioned within a channel therein;
FIG. 5 is another schematic representation of a horizontal cross-sectional view of a carbon block of the carbon filtration assembly of FIG. 3A, the carbon block including a flow distribution baffle positioned within a channel therein;
FIG. 6 is a schematic representation of a horizontal cross-sectional view of a carbon block of the carbon filtration assembly of FIG. 3A, the carbon block including a flow distribution baffle and one or more beads of a non-dissolving media positioned within a channel therein;
FIG. 7 is a top view of the flow distribution baffle of any of FIGS. 4-6;
FIG. 8 is a schematic representation of a vertical cross-sectional view of the carbon filtration assembly of FIG. 3A;
FIG. 9 is a side elevational view of a flow distribution baffle of the carbon filtration assembly of FIG. 3A;
FIG. 10A is a schematic representation of a vertical cross-sectional view of the carbon filtration assembly of FIG. 3A with the flow distribution baffle of FIG. 9 in a first position;
FIG. 10B is a schematic representation of a vertical cross-sectional view of the carbon filtration assembly of FIG. 3A with the flow distribution baffle of FIG. 9 in a second position;
FIG. 10C is a schematic representation of a vertical cross-sectional view of the carbon filtration assembly of FIG. 3A with the flow distribution baffle of FIG. 9 in a third position;
FIG. 11A is an isometric bottom view of another flow distribution baffle for use with the carbon filtration assembly of FIG. 3A;
FIG. 11B is a top plan view of another implementation of a cap of the baffle of FIG. 11A;
FIG. 12A is a side elevational view of yet another flow distribution baffle for use with the carbon filtration assembly of FIG. 3A;
FIG. 12B is a side elevational view of a further flow distribution baffle for use with the carbon filtration assembly of FIG. 3A;
FIG. 12C is a side elevational view of an additional flow distribution baffle for use with the carbon filtration assembly of FIG. 3A;
FIG. 13 is a side elevational view of the flow distribution baffle of any of FIGS. 9, 11A, 11B, 12A, 12B, and 12C including visual representations of cut lines that can be used to create one or more angled surfaces on ends of the flow distribution baffle;
FIG. 14 is a schematic representation of a vertical cross-sectional view of the carbon filtration assembly of FIG. 3A including the flow distribution baffle of FIG. 12B;
FIG. 15A is a front perspective view of carbon media filters including a molded carbon block with a synthetic fiber matrix that may include any of the flow distribution baffles of FIGS. 9, 11A, 11B, 12A, 12B, and 12C;
FIG. 15B is a front perspective view of carbon media filters including a polyolefin bilaminate pre-filter layer that at least partially surrounds a carbon block filter that may include any of the flow distribution baffles of FIGS. 9, 11A, 11B, 12A, 12B, and 12C;
FIG. 15C is a front perspective view of various string-wound sediment filters that may include any of the flow distribution baffles of FIGS. 9, 11A, 11B, 12A, 12B, and 12C;
FIG. 15D is a front perspective view of various melt-blown filter media that may include any of the flow distribution baffles of FIGS. 9, 11A, 11B, 12A, 12B, and 12C;
FIG. 16 is a flowchart illustrating a method of purifying water using the carbon filtration assembly of FIG. 3A; and
FIG. 17 is a graph illustrating phosphate release performance for the carbon filtration assembly of FIG. 3A versus a conventional carbon filtration assembly without a flow distribution baffle, with both carbon filtration assemblies utilizing phosphate beads as a non-dissolving media.

While the disclosure is susceptible to various modifications and alternative forms, a specific embodiment thereof is shown by way of example in the drawings and will herein be described in detail. It should be understood, however, that the drawings and detailed description presented herein are not intended to limit the disclosure to the particular embodiment disclosed, but to the contrary, the intention is to cover all modifications, equivalents, and alternatives falling within the spirit and scope of the present disclosure as defined by the appended claims.

### DETAILED DESCRIPTION

Before any embodiments are described in detail, it is to be understood that the disclosure is not limited in its application to the details of construction and the arrangement of components set forth in the following description or illustrated in the following drawings, which is limited only by the claims that follow the present disclosure. The disclosure is capable of other embodiments, and of being practiced, or of being carried out, in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The following description is presented to enable a person skilled in the art to make and use instances of the disclosure. Various modifications to the illustrated instances will be readily apparent to those skilled in the art, and the generic principles herein can be applied to other instances and applications without departing from instances of the disclosure. Thus, instances of the disclosure are not intended to be limited to cases shown but are to be accorded the widest scope consistent with the principles and features disclosed herein. The following detailed description is to be read with reference to the figures, in which like elements in different figures have like reference numerals. Skilled artisans will recognize the examples provided herein have many useful alternatives and fall within the scope of instances of the disclosure.

Additionally, while the following discussion may describe features associated with specific devices or instances, it is understood that additional devices and/or features can be used with the described systems and methods, and that the discussed devices and features are used to provide examples of possible instances, without being limited.

According to the teachings herein, a water purification system including a carbon filtration device and methods of using the carbon filtration device are provided. The water purification system may be configured or designed to remove contaminants, impurities, and other substances (generally referred to as "undesired substances") from a source water flowing through the system, thereby generating a treated or purified water stream. In various instances, a concentration of undesired substances in the treated water stream may be less than a concentration of undesired substances in the source water.

The carbon filtration device may be provided in the form of a carbon block filter including a flow distribution baffle. The carbon block filter may be provided in the form of a body having a channel extending through the body. For example, the channel may extend from a first end to a second end of the body. An end cap may be coupled to the first end or the second end of the body such that the carbon block filter can be coupled to other components of the carbon filtration device or the water purification system. In some cases, a first end cap coupled to the first end is in fluid communication with a source of water and a second end cap coupled to the second end is configured or designed to provide a filtered water from the carbon block filter. As such, the second end cap may be in fluid communication with an outlet of the carbon filtration device. The flow distribution baffle may be configured or designed to reduce or substantially eliminate the pressure drop associated with utilizing a non-dissolving media (e.g., beads) in the carbon block filter. The flow distribution baffle may be disposed in the channel extending through the carbon block filter. The flow distribution baffle may be imparted with a first diameter that is somewhat less than a second diameter of the channel. Thus, the flow distribution baffle may be configured or designed to move (e.g., float) within the channel as water flows through the channel.

In some instances, a non-dissolving media may also be disposed in the channel of the carbon block filter. The non-dissolving media may be configured or designed to inhibit growth of bacteria or other biologics in the carbon filtration device, remove dissolved minerals (e.g., calcium and magnesium) that contribute to scaling and corrosion of water-carrying pipes, inhibit the formation of scale in water-carrying pipes, and remove other undesired substances from a water stream. For example, the non-dissolving media may be selected from the group consisting of phosphate, polyphosphate, ion-exchange resins, copper and zinc-based alloys, manganese greensand, zeolites, glassy- or glass-based solid state combination medias, and combinations thereof. However, when the non-dissolving media is used without the flow distribution baffle, the non-dissolving media may block flow of water through or out of the carbon filtration device, thereby increasing pressure drop through the channel and causing a drop in water flow velocity through the carbon block filter. The reduction of the water flow velocity and the increase in the pressure drop are particularly significant when the non-dissolving media becomes lodged in an end cap of the carbon filter block (i.e., the end cap in fluid communication with the outlet of the carbon filtration device).

The flow distribution baffle may help prevent the non-dissolving media from abutting, entering, or becoming lodged in an end cap as water flows through the carbon filter block, thereby helping prevent the end cap from becoming clogged or obstructed by the non-dissolving media. Thus, the flow distribution baffle may be configured or designed to help maintain a flow velocity of water passing through and out of the carbon filtration device by reducing or substantially eliminating a pressure drop of the water flowing through the carbon block filter.

In some cases, the flow distribution baffle may be provided in the form of a tube having a baffle with a single opening at a first end and one or more baffle openings at a second end. In some instances, at least a portion of the flow distribution baffle may be provided in the form of an extruded tube. In various instances, the flow distribution baffle may be composed of any material that will maintain a shape and form after prolonged exposure to water (e.g., plastics, rubber, etc.). In some instances, one or more portions of a body of the flow distribution baffle (e.g., a sidewall of the flow distribution baffle) may be non-porous or porous. For example, one or more holes may extend through a sidewall of the flow distribution baffle. Additionally, one or more portions of the body of the baffle (e.g., the sidewall) may be permeable, semi-permeable, or non-permeable to water.

The one or more baffle openings of the flow distribution baffle may be imparted with a baffle opening diameter. The non-dissolving media may be provided in the form of beads. The non-dissolving media may be imparted with a bead diameter that is somewhat greater than the baffle opening diameter, such that the non-dissolving media may be substantially prevented or prevented from passing through the baffle openings (and thus substantially prevented or prevented from passing through the baffle). In addition, the flow distribution baffle may be appropriately sized to help prevent the non-dissolving media from flowing around the baffle in the channel of the carbon block filter.

As stated above, the non-dissolving media may be provided in the form of beads. For example, the non-dissolving media may be provided in the form of phosphate beads. As an additional example, the non-dissolving media may be provided in the form of an ion-exchange resin media (e.g., ion-exchange resin beads). In other instances, the non-dissolving media may be provided in the form of beads, granules, pellets, particles, or other similar forms.

In certain instances, the water purification system may include a filtration cartridge provided with a flow distribution baffle. In such instances, the filtration cartridge may include filtration media provided in the form of a carbon block filter, a pre-coat filter, an activated carbon filter combined with fiber or fibrous material such as a Fibredyne ^{®} filter available from Pentair Filtration Solutions, LLC of Golden Valley, Minnesota, a loose media filter, a melt-blown filter, a poly-spun filter, a fiber-wound filter, or any other radially or axially flowing water filter. In certain cases, the filtration media may include activated carbon, or the filtration media may omit activated carbon. In each instance, the filtration media may include a flow distribution baffle and a non-dissolving media positioned within a flow channel of the filtration media. The flow distribution baffle may be configured or designed to move (e.g., float) within the flow channel as water passes through the channel. In addition, the flow distribution baffle may be configured or designed to help maintain a flow velocity of water passing through and out of the filtration cartridge by reducing or substantially eliminating a pressure drop of the water flowing through the filtration media. Furthermore, the flow distribution baffle may be configured or designed to help prevent the non-dissolving media from abutting, entering, or becoming lodged in an end cap as water flows through the filtration media, thereby helping prevent the end cap from becoming clogged or obstructed by the non-dissolving media.

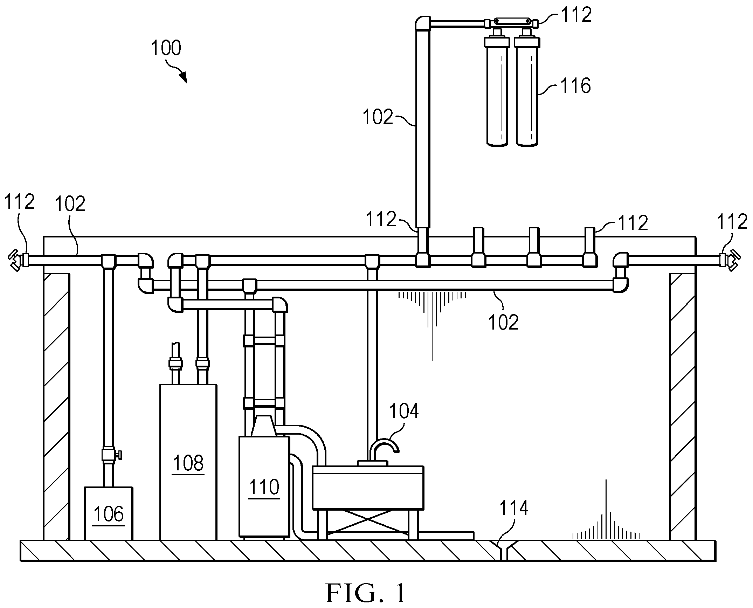

Turning to FIG. 1, a home water system 100 may be provided in the form of one or more conduits 102, one or more faucets 104, a pump 106, a water heater 108, a water softener system 110, one or more outlets 112, and a drain 114. In certain instances, the home water system 100 may further include a water purification system 116 configured or designed to filter or remove various contaminants, impurities, or other substances from water. The home water system 100 may be configured or designed to provide water on demand to a residential end user and various appliances used by the residential end user.

The one or more conduits 102 may be configured or designed to place the aforementioned components of the home water system 100 in fluid communication. The one or more conduits 102 may also facilitate the provision of water to the end user via the one or more faucets 104 and the one or more outlets 112. The pump 106 may be in fluid communication with a source of inlet water and may be used to provide the inlet water to the components of the home water system via the one or more conduits 102. The one or more conduits 102 may be provided in the form of substantially hollow cylinders, although the one or more conduits 102 may also be provided in other shapes. In addition, the one or more conduits 102 may be constructed of a rust-resistant material, such as stainless steel, PVC, or copper alloys, although the one or more conduits 102 may also be constructed from other materials.

The water heater 108, the water softener system 110, and the water purification system 116 may each be configured or designed to alter the physical parameters and/or chemical parameters of the inlet water before the water is provided to the end user. For example, the water heater 108 may increase the temperature of the water before the water is provided to the one or more outlets 112. In addition, the water softener system 110 may be configured or designed to remove hardness-imparting ions, such as divalent and/or trivalent ions (e.g., calcium ions and magnesium ions), from the water via filtration through a resin bed. The resin bed may be comprised of, consist essentially of, or consist of beads that provide a surface to which the divalent and trivalent ions in the hard water can bond, thereby replacing the divalent and trivalent ions with monovalent ions (e.g., sodium and potassium) and generating a softened water. The softened water may exit the water softener system 110 and be provided through the outlets 112. In certain instances, the water softener system 110 may be provided as any of the water softener systems described in U.S. Patent App. Ser. No. 19/002,269, titled "System and Methods for Resin Breakthrough Identification Using Ion-Selective Electrodes," the disclosure of which is incorporated by reference in its entirety herein.

The water purification system 116 may generally be configured or designed to filter or remove one or more components from the water stream, thereby generating a filtered water or a treated water. For example, the water purification system 116 may filter particulates, contaminants, debris, dirt, hardness-imparting minerals, unwanted aqueous components, and/or other undesired substances from the water stream. For example, the water purification system 116 may filter chloramines and other disinfectants that may be used to treat water streams provided to the end user. In certain instances, the water purification system 116 may include a carbon filtration device configured or designed to capture particulates or dissolved minerals, including, but not limited to, volatile organic compounds (VOCs), trihalomethanes (THMs), per- and polyfluoroalkyl substances (PFAS), heavy metals (e.g., iron, mercury, lead, arsenic), hardness-imparting ions (e.g., magnesium, calcium), chlorine, chlorine-containing compounds, and other dissolved particles, and/or inhibit the formation of magnesium and calcium crystals that lead to scale formation. For example, the carbon filtration device may be configured or designed to capture undesired substances from a water stream, the undesired components selected from the group consisting of VOCs, THMs, PFAS, heavy metals, hardness-imparting compounds or ions, chlorine, chlorine-containing compounds, other dissolved particles, and combinations thereof. In certain instances, the carbon filtration device may filter micron-sized substances and particles (e.g., dirt) and other larger particles from a water stream, as well as filter chloramine and other chemical disinfectants from the water stream.

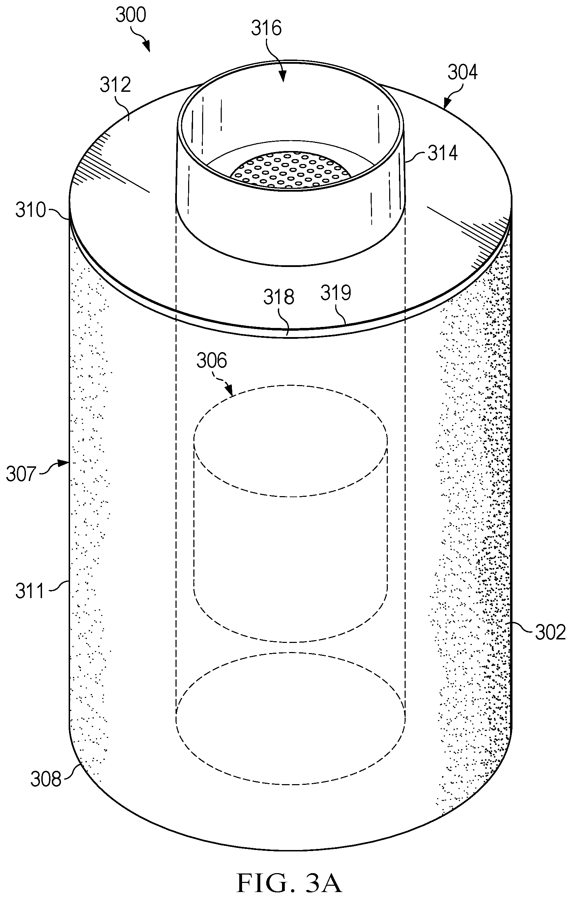

Advantageously, the carbon filtration device may include a flow distribution baffle that facilitates the introduction of additional, non-aqueous or non-dissolving filtration media into the carbon filtration device, while also reducing the risk that the non-dissolving filtration media will clog or obstruct water flow through the carbon filtration device. Thus, the flow distribution baffle may increase the efficacy of the carbon filtration device. For example, the carbon filtration device may include one or more components of a carbon filtration assembly 300, as described below with reference to FIGS. 3A-14.

Referring again to FIG. 1, in certain instances, the water purification system 116 may be positioned upstream of the water softener system 110, such that filtered water is provided to the water softener system 110. In other instances, as shown in FIG. 1, the water purification system 116 may be positioned downstream of the water softener system 110, such that softened water is provided to the water purification system 116. For example, the water purification system 116 may be provided proximate to an appliance (not depicted), such as a refrigerator or kitchen sink, and may be placed in fluid communication with the appliance. In yet other instances, the water softener system 110 and the water purification system 116 may not be in fluid communication with one another.

The one or more outlets 112 may be configured or designed to direct water throughout the home and to various fixtures and appliances. For example, the one or more outlets 112 may be in fluid communication with a kitchen sink, a laundry machine, a refrigerator, a bathroom sink, a toilet, a shower, a bathtub, and the like. As an additional example, the one or more outlets 112 may provide water to the water purification system 116. As a further example, the one or more outlets 112 may directly provide water to the end user.

The drain 114 may be configured or designed to evacuate water from near or around the home water system 100. For example, if there is a failure of a component of the home water system 100 or another event that causes a flow of water outside of the home water system 100, the drain 114 may provide the water to a sewage or drainage system configured or designed to evacuate the water from the home. In some cases, the drain 114 may be disposed within a floor of the area around the home water system 100, such that water may be provided to the sewage or drainage system via gravitational force.

It is to be understood that, while a home water system (i.e., a home water system 100) is shown in FIG. 1, the water purification system 116 may be used in any residential or commercial setting. For example, the water purification system 116 may be provided as part of the water system of a restaurant, a coffee shop, a beverage and/or ice dispenser, a fitness center, an apartment complex, or the like. In addition, the home water system 100 may include additional components or fewer components than those described herein.

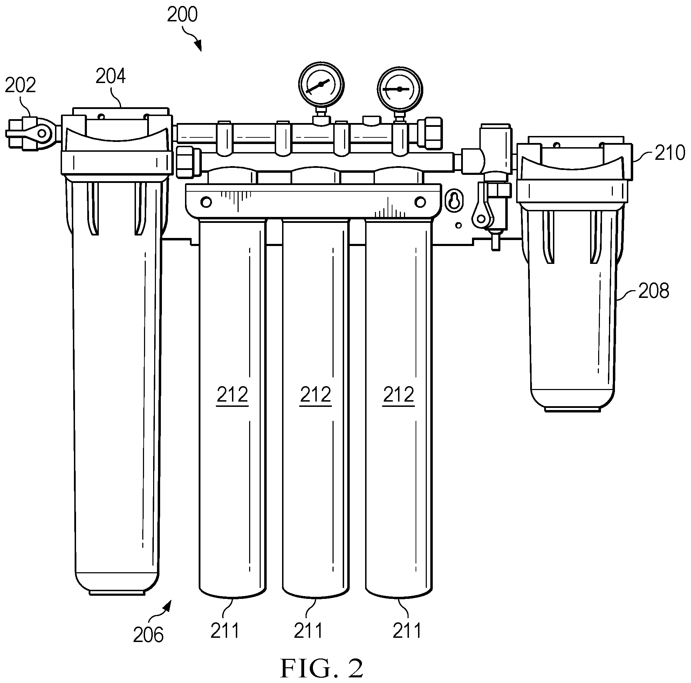

Turning next to FIG. 2, a water purification system 200 designed for use in a residential or commercial water system is provided. The water purification system 200 may be provided in the form of an inlet 202, a prefilter 204, one or more filtration cartridges 206, a scale inhibitor 208, and an outlet 210. The water purification system 200 may be configured or designed to reduce the concentration of unwanted contaminants, impurities, or other substances in a water stream and, in some cases, inhibit bacterial growth and scale formation in a commercial water system. For example, the water purification system 200 may be configured or designed to filter or remove suspended particles, chlorine, chloramines, microbes, water hardness-imparting minerals, and other substances (e.g., odor-causing substances) from a water stream. In certain instances, the water purification system 200 may be provided in the form of an EVERPURE^{®} water purification system provided by Pentair Filtration Solutions, LLC of Golden Valley, Minnesota. In other instances, the water purification system 200 may be provided in the form of a FRESHPOINT^{®} system provided by Pentair Residential Filtration, LLC of Golden Valley, Minnesota.

The inlet 202 may be configured or designed to receive a flow of water and provide the flow of water to the other components of the water purification system 200. The inlet 202 may include threads, tabs, or other mechanical affixation features that may be configured or designed to couple the water purification system 200 to a water conduit (not depicted). The water conduit may be in fluid communication with a source water. Representative source water can include municipally treated water or water sourced from a subsurface well or a body of surface water. The inlet 202 may be in fluid communication with the prefilter 204 such that the flow of water received by the inlet 202 may be directed to the prefilter 204.

The prefilter 204 may be configured or designed to capture and remove large particles (e.g., dirt) from the flow of water. In certain instances, the prefilter 204 may be configured or designed to capture particles with a diameter of at least about 10 microns (or at least 10 microns) in size, although the prefilter 204 may also be configured or designed to capture smaller particles. In some cases, the prefilter 204 may be provided in the form of a spun sediment filtration cartridge. The prefilter 204 may be selectively couplable to the water purification system 200 such that the prefilter 204 can be replaced when the prefilter 204 reaches the end of a service life. The prefilter 204 may include threads, tabs, or other mechanical affixation components configured or designed to selectively couple the prefilter 204 to the water purification system 200. In addition, the prefilter 204 may be in fluid communication with the one or more filtration cartridges 206 such that the prefilter 204 may provide water to the one or more filtration cartridges 206. In certain instances, the prefilter 204 may be omitted from the water purification system 200.

The one or more filtration cartridges 206 may be configured or designed to remove or filter particulates, contaminants, debris, dirt, unwanted aqueous components, and/or other substances from a water stream. For example, the one or more filtration cartridges 206 may filter dirt, particles, dissolved minerals, and other undesired substances from the water stream. As an additional example, the one or more filtration cartridges 206 may also filter cysts such as *Cryptosporidium* and *Giardia* from the water stream. Each of the one or more filtration cartridges 206 may include an external housing 211 and internal filtration components (e.g., the carbon filtration assembly 300 of FIGS. 3A-10, and 14) disposed in the external housing 211. The one or more filtration cartridges 206 may be configured or designed to be replaceable such that the one or more filtration cartridges 206 can be replaced when the one or more filtration cartridges 206 reach the end of a service life. In addition, the one or more filtration cartridges 206 may include threads, tabs, or other mechanical features that selectively couple the one or more filtration cartridges 206 to the water purification system 200.

The one or more filtration cartridges 206 may include a single filtration cartridge or at least two filtration cartridges (e.g., two filtration cartridges, three filtration cartridges, four filtration cartridges, etc.). In some instances, such as when the one or more filtration cartridges 206 include at least two filtration cartridges, the one or more filtration cartridges 206 may be arranged in series. In other instances, the one or more filtration cartridges 206 may be arranged in series and/or in parallel. In various cases, at least one of the one or more filtration cartridges 206 may be taken offline while the remaining filtration cartridges filter the water.

In some cases, the one or more filtration cartridges 206 may be in fluid communication with the scale inhibitor 208, although the scale inhibitor 208 may also be omitted from the water purification system 200. The water stream flowing out of the one or more filtration cartridges 206 (i.e., a filtered water stream) may be received by the scale inhibitor 208. The scale inhibitor 208 may be configured or designed to reduce or inhibit scale accumulation and/or remove lime deposits from various downstream appliances or fixtures receiving water from the water purification system 200. For example, the scale inhibitor 208 may include an internal dip tube assembly and a chemical scale remover that is retained in an external casing of the scale inhibitor 208. In instances where the scale inhibitor 208 includes a chemical scale remover, the scale inhibitor 208 may be configured or designed to dispense a controlled amount of the chemical scale remover to water flowing through the scale inhibitor 208.

The scale inhibitor 208 may be selectively couplable to the water purification system 200 such that the scale inhibitor 208 can be replaced when the scale inhibitor 208 reaches the end of a service life. The scale inhibitor 208 may include threads, tabs, or other mechanical affixation components configured or designed to selectively couple the scale inhibitor 208 to the water purification system 200. In addition, the scale inhibitor 208 may be in fluid communication with the outlet 210 such that the filtered water generated by the water purification system 200 may be provided to the end user.

Referring still to FIG. 2, at least one of the one or more filtration cartridges 206 may be provided in the form of a carbon filtration cartridge 212 configured or designed to remove various substances from water. In some instances, the carbon filtration cartridge 212 may include one or more components of the carbon filtration assembly 300 (see FIGS. 3A-14), and said components of the carbon filtration assembly 300 may be disposed within the external housing 211. In some instances, the one or more filtration cartridges 206 of the water purification system 200 may comprise three carbon block filtration cartridges 212 arranged in series, as depicted in FIG. 2. In other instances of the water purification system, additional or fewer carbon block filtration cartridges 212 may be provided as the one or more filtration cartridges 206.

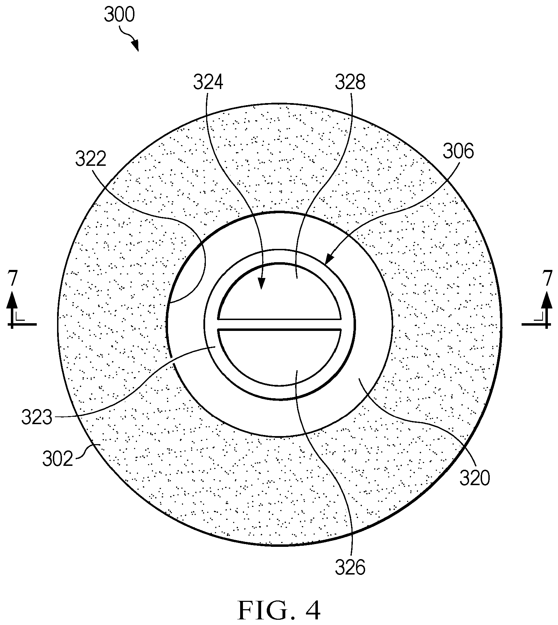

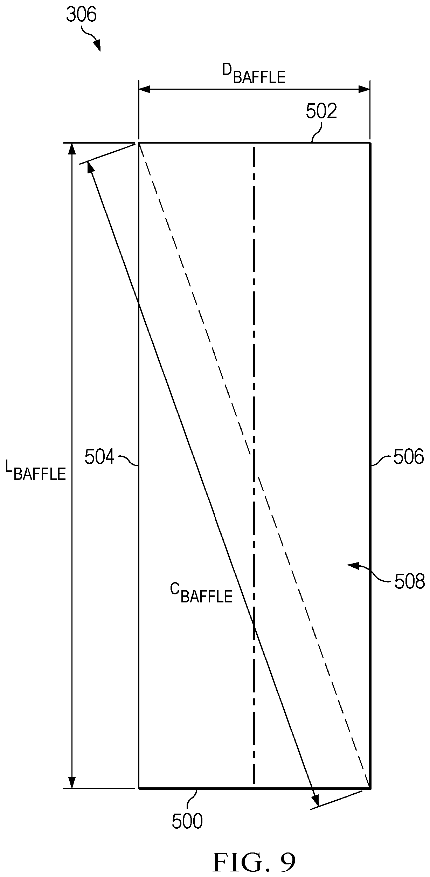

Turning to FIG. 3A, the carbon filtration assembly 300 is provided in the form of a carbon block 302, an end cap 304, and a flow distributor or baffle 306 disposed within the carbon block 302 (e.g., see FIGS. 4 and 9). The carbon block 302 may be provided in the form of a body 307 having a first end 308 positioned opposite a second end 310. The carbon block 302 may comprise activated carbon that is compressed into or provided in any desired shape (e.g., cylindrical, rectangular prism, hexagonal prism, octagonal prism, other polygonal prism shapes, or other three-dimensional shapes). For example, as shown in FIG. 3A, the carbon block 302 may be provided in the form of a cylinder.

The carbon block 302 may be configured or designed to allow water to pass through an outer wall 311 of the body 307 and/or other openings provided in the carbon block 302. As the water passes through the carbon block 302, particulates, dissolved minerals, and other undesired substances may be filtered by or trapped within the carbon block 302. For example, the carbon block 302 may be configured or designed to capture particulates or dissolved minerals, including, but not limited to, VOCs, THMs, PFAS, heavy metals (e.g., iron, mercury, lead, arsenic), hardness-imparting compounds or ions (e.g., magnesium, calcium), chlorine, chlorine-containing compounds, and other dissolved particles. For example, the carbon block 302 may be configured or designed to capture undesired substances from a water stream, the undesired components selected from the group consisting of VOCs, THMs, PFAS, heavy metals, hardness-imparting compounds or ions, chlorine, chlorine-containing compounds, other dissolved particles, and combinations thereof. As such, the carbon block 302 (and thus the carbon filtration assembly 300) may generate a filtered water. The filtered water may exit the carbon block 302 via the end cap 304.

The end cap 304 may be configured or designed to provide a fluid flow path for the filtered water to exit the carbon block 302 such that the filtered water can be provided to an outlet of the carbon filtration assembly 300. The end cap 304 may be provided in the form of a base 312, a protrusion 314, an opening 316, and a lip 318. The base 312 may be configured or designed to form a watertight or substantially watertight connection with the first end 308 and/or the second end 310 of the carbon block 302 (e.g., the second end 310 of the carbon block 302 as shown in FIG. 3A). In some instances, the base 312 may be coupled to the second end 310 via an adhesive or a friction fit. The seal provided between the base 312 and the second end 310 may help ensure that most, substantially all, or all of the water flowing through the carbon block 302 exits the carbon block 302 through the opening 316 of the end cap 304.

The protrusion 314 may extend upwardly from the base 312 and may partially or fully surround the opening 316. In some instances, the protrusion 314 may be configured or designed to couple to an outlet of the carbon filtration assembly 300 (not depicted). In such instances, the protrusion 314 may provide a fluid flow path for filtered water to flow from the carbon block 302 to the outlet of the carbon filtration assembly 300.

In some instances, the lip 318 may extend downwardly from an edge 319 of the base 312. The lip 318 may be configured or designed to help secure the end cap 304 to the carbon block 302. For example, the lip 318 may form a snap-fit or press-fit connection between the end cap 304 and the second end 310 of the carbon block 302.

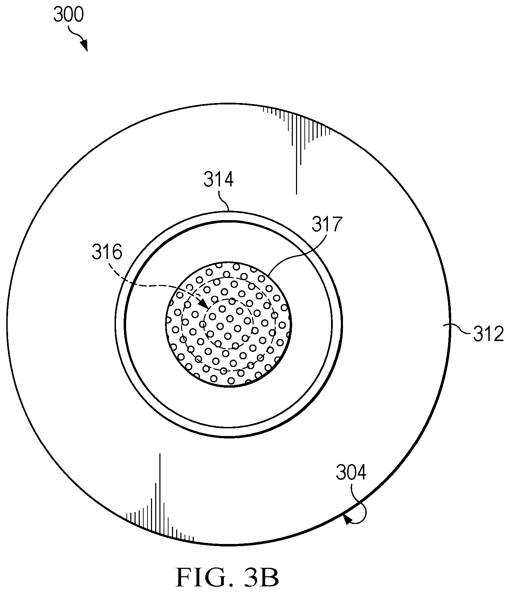

Turning to FIG. 3B, in some instances, the end cap 304 may be configured or designed to help ensure that particulates (e.g., a non-dissolving media retained in the carbon block 302) do not exit the carbon filtration assembly 300 with the filtered water. The end cap 304 may further comprise a screen 317 that partially, substantially, or completely covers the opening 316. The screen 317 may be imparted with a plurality of openings. The screen 317 may be provided over the opening 316. In some instances, the screen 317 may be integrally formed with the end cap 304. In other instances, the screen 317 may be affixed or coupled to the end cap via gluing, welding, or other attachment means.

As illustrated in FIG. 4, the baffle 306 may be retained within a channel 320 of the carbon block 302. In some cases, the baffle 306 may have substantially the same shape as the channel 320. For example, both the baffle 306 and the channel 320 may be provided as cylindrical elements. In other cases, the baffle 306 may not have substantially the same shape as the channel 320 (e.g., a cylindrical baffle may be used within a non-cylindrical channel).

The channel 320 may be substantially defined by an interior wall 322 of the carbon block 302 and extend the length of the carbon block 302. Thus, the channel 320 may be entirely disposed within the body 307 of the carbon block 302. The channel 320 may be configured or designed to direct the flow of water through the carbon block 302 and to the end cap 304 of FIG. 3A after the water has passed through the interior wall 322. For example, water may pass through the body 307 of the carbon block 302 and exit the body 307 of the carbon block 302 by passing through the interior wall 322. The channel 320 may then direct the filtered water out of the carbon block 302 to the opening 316 of the end cap 304.

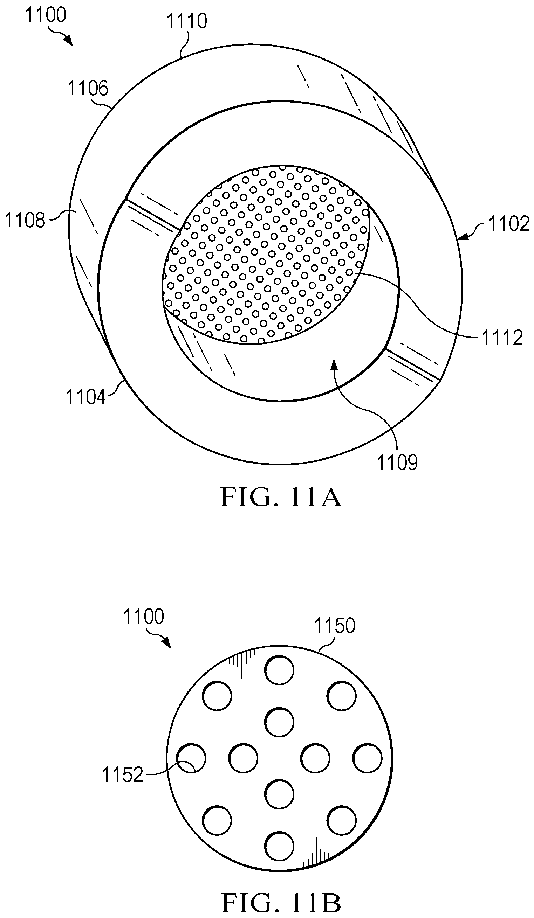

Turning to FIG. 4, a surface 323 of the baffle 306 may include one or more baffle openings 324. For example, the one or more baffle openings 324 may include a first baffle opening 326 and a second baffle opening 328, as depicted in FIG. 4, although the number of baffle openings is not particularly limited. For example, in alternative instances, the one or more baffle openings 324 may include a single baffle opening or more than two baffle openings (e.g., see one or more baffle openings 1152 of FIG. 11B). The one or more baffle openings 324 may be configured or designed to facilitate the flow of water through the baffle 306. In addition, the one or more baffle openings 324 may be sized and shaped to help prevent a non-dissolving media retained in the channel 320 from traveling through the baffle 306 and, ultimately, to the end cap 304. Thus, the baffle 306 may help maintain a flow velocity of water flowing through the carbon block 302 and/or help prevent or reduce a pressure drop associated with the carbon block 302.

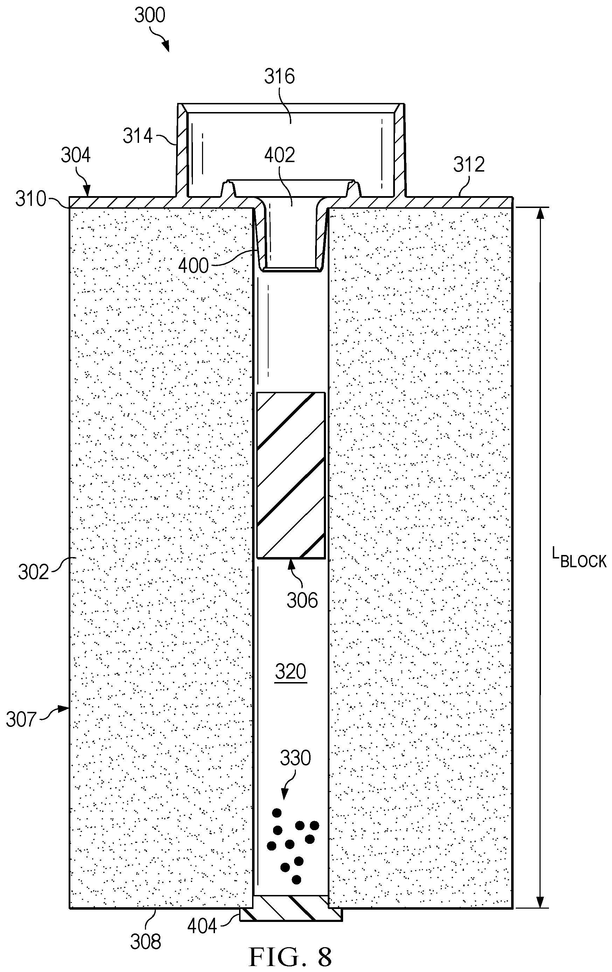

The baffle 306 may be slightly or substantially smaller than the channel 320. For example, when a horizontal cross-section of the baffle 306 and the channel 320 is taken when the carbon filtration assembly is arranged in an upright configuration (e.g., see FIG. 8), a first cross-sectional area of the baffle 306 may be substantially the same as, somewhat less, or substantially less than a second cross-sectional area of the channel 320. Thus, the baffle 306 may be disposed within the channel 320 when the carbon filtration assembly 300 is assembled and may move within the channel 320 in at least a first direction (e.g., upwards) and a second direction (e.g., downwards).

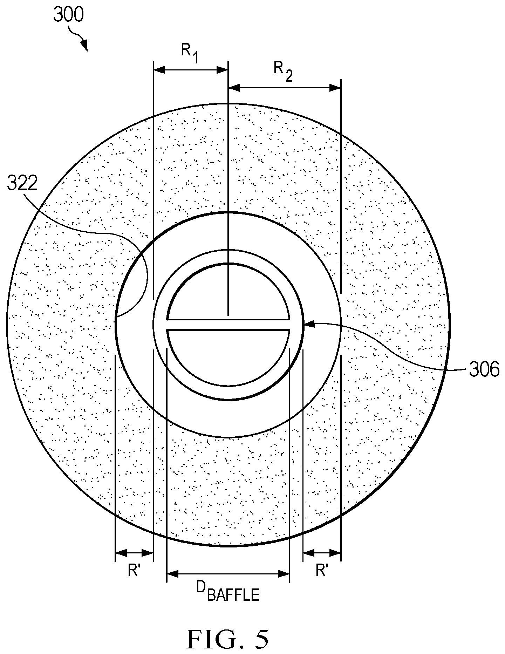

As depicted in FIG. 5, the baffle 306 may be imparted with a baffle radius R₁ and a baffle diameter D_{Baffle}, while the channel 320 may be imparted with a channel radius R₂. The baffle radius R₁ may be imparted with a first value, the channel radius R₂ may be imparted with a second value, and the baffle diameter D_{Baffle} may be imparted with a third value. The first value of the baffle radius R₁ may be half (or about half) of the third value of the baffle diameter D_{Baffle}. In addition, the second value of the channel radius R₂ may be somewhat larger than the first value of the baffle radius R₁. For example, the baffle radius R₁ may be imparted with a first value of about 1 millimeter to about 30 millimeters, or about 1 millimeter to about 20 millimeters, or about 2 millimeters to about 10 millimeters, or about 20 millimeters to about 30 millimeters, and the channel radius R₂ may be imparted with a second value of about 1 millimeter to about 40 millimeters, or about 3 millimeters to about 30 millimeters, or about 10 millimeters to about 20 millimeters, or about 20 millimeters to about 30 millimeters, or about 30 millimeters to about 40 millimeters, although the first value and the second value may be somewhat less or even greater than these values. As an additional example, the baffle radius R₁ may be imparted with a first value of 1 millimeter to 30 millimeters, or 1 millimeter to 20 millimeters, or 2 millimeters to 10 millimeters, or 20 millimeters to 30 millimeters, and the channel radius R₂ may be imparted with a second value of 1 millimeter to 40 millimeters, or 3 millimeters to 30 millimeters, or 10 millimeters to 20 millimeters, or 20 millimeters to 30 millimeters, or 30 millimeters to 40 millimeters.

In certain instances, the baffle radius R₁ may be imparted with a first value of at least about 1 millimeter, or at least about 4 millimeters, or at least about 6 millimeters, or at least about 8 millimeters, or at least about 10 millimeters, or at least about 12 millimeters, or at least about 14 millimeters, or at least about 16 millimeters, or at least about 18 millimeters, or at least about 20 millimeters, or at least about 22 millimeters, or at least about 24 millimeters, or at least about 26 millimeters, or at least about 28 millimeters, or at least about 30 millimeters, or at least about 32 millimeters, or at least about 34 millimeters, or at least about 36 millimeters, or at least about 38 millimeters, or at least about 40 millimeters, or at least about 42 millimeters, or at least about 44 millimeters, or at least about 46 millimeters, or at least about 48 millimeters, or no more than about 50 millimeters. In other instances, the baffle radius R₁ may be imparted with a first value of at least 1 millimeter, or at least 4 millimeters, or at least 6 millimeters, or at least 8 millimeters, or at least 10 millimeters, or at least 12 millimeters, or at least 14 millimeters, or at least 16 millimeters, or at least 18 millimeters, or at least 20 millimeters, or at least 22 millimeters, or at least 24 millimeters, or at least 26 millimeters, or at least 28 millimeters, or at least 30 millimeters, or at least 32 millimeters, or at least 34 millimeters, or at least 36 millimeters, or at least 38 millimeters, or at least 40 millimeters, or at least 42 millimeters, or at least 44 millimeters, or at least 46 millimeters, or at least 48 millimeters, or no more than 50 millimeters.

In certain instances, the channel radius R₂ may be imparted with a second value of at least about 4 millimeters, or at least about 6 millimeters, or at least about 8 millimeters, or at least about 10 millimeters, or at least about 12 millimeters, or at least about 14 millimeters, or at least about 16 millimeters, or at least about 18 millimeters, or at least about 20 millimeters, or at least about 22 millimeters, or at least about 24 millimeters, or at least about 26 millimeters, or at least about 28 millimeters, or at least about 30 millimeters, or at least about 32 millimeters, or at least about 34 millimeters, or at least about 36 millimeters, or at least about 38 millimeters, or at least about 40 millimeters, or at least about 42 millimeters, or at least about 44 millimeters, or at least about 46 millimeters, or at least about 48 millimeters, or no more than about 50 millimeters. In other instances, the channel radius R₂ may be imparted with a second value of at least 4 millimeters, or at least 6 millimeters, or at least 8 millimeters, or at least 10 millimeters, or at least 12 millimeters, or at least 14 millimeters, or at least 16 millimeters, or at least 18 millimeters, or at least 20 millimeters, or at least 22 millimeters, or at least 24 millimeters, or at least 26 millimeters, or at least 28 millimeters, or at least 30 millimeters, or at least 32 millimeters, or at least 34 millimeters, or at least 36 millimeters, or at least 38 millimeters, or at least 40 millimeters, or at least 42 millimeters, or at least 44 millimeters, or at least 46 millimeters, or at least 48 millimeters, or no more than 50 millimeters.

The baffle 306 may be configured or designed to move within the channel 320 as water flows through the channel 320. To help facilitate movement of the baffle 306 within the channel 320, the baffle 306 may be sized and shaped such that a baffle gap R' is provided between the interior wall 322 and the baffle 306 when the baffle 306 is positioned in the channel 320. The baffle gap R' may be defined as the space that is provided between the baffle 306 and the interior wall 322 when the baffle 306 is positioned in a center of the channel 320. While the baffle gap R' may be substantially the same on all sides of the baffle 306 (e.g., when the baffle 306 and the channel 320 are both provided in substantially the same shape) the baffle gap R' need not be the same value on all sides of the baffle 306. When both the baffle 306 and the channel 320 are substantially the same shape, the baffle gap R' may be determined by subtracting R₁ from R₂. Thus, the value of the baffle gap R' may be greater than about zero (or greater than zero) when the channel radius R₂ is imparted with a larger value than the baffle radius R₁.

In various instances, the baffle gap R' may be imparted with a third value that is greater than about zero (or greater than zero). For example, the baffle gap R' may be imparted with a third value of about 0.1 millimeters to about 10 millimeters (or 0.1 millimeters to 10 millimeters), although the baffle gap R' may also be somewhat smaller or even larger than these values. As one example, the baffle gap R' may be imparted with a third value falling within the range of about 0.1 millimeters to about 10 millimeters (or 0.1 millimeters to 10 millimeters), or about 0.5 millimeters to about 9 millimeters (or 0.5 millimeters to 9 millimeters), or about 1 millimeter to about 8 millimeters (or 1 millimeter to 8 millimeters), or about 1 millimeter to about 6 millimeters (or 1 millimeter to 6 millimeters). As an additional example, the baffle gap R' may be imparted with a third value of less than about 0.1 millimeters, or at least about 0.1 millimeters, or at least about 0.25 millimeters, or at least about 0.5 millimeters, or at least about 0.75 millimeters, or at least about 1 millimeter, or at least about 2 millimeters, or at least about 3 millimeters, or at least about 4 millimeters, or at least about 5 millimeters, or at least about 6 millimeters, or at least about 7 millimeters, or at least about 8 millimeters, or at least about 9 millimeters, or at least about 10 millimeters. As an additional example, the baffle gap R' may be imparted with a third value of less than 0.1 millimeters, or at least 0.1 millimeters, or at least 0.25 millimeters, or at least 0.5 millimeters, or at least 0.75 millimeters, or at least 1 millimeter, or at least 2 millimeters, or at least 3 millimeters, or at least 4 millimeters, or at least 5 millimeters, or at least 6 millimeters, or at least 7 millimeters, or at least 8 millimeters, or at least 9 millimeters, or at least 10 millimeters. In certain instances, the size of the baffle gap R' may be related to the size of the non-dissolving media (e.g., the non-dissolving media 330) provided in the channel 320. For example, the baffle gap R' may be imparted with a third value that is somewhat or substantially less than the average diameter of the non-dissolving media provided in the channel 320.

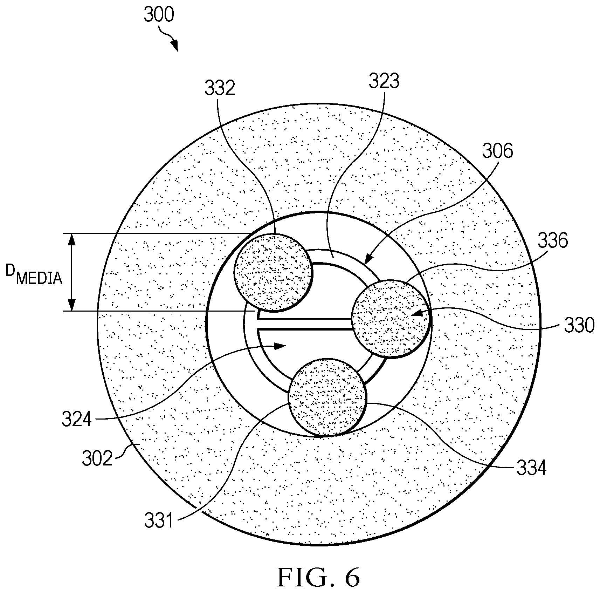

As shown in FIG. 6, the carbon filtration assembly 300 may include non-aqueous or non-dissolving media 330. The non-dissolving media 330 may be provided in the form of phosphate, polyphosphate, ion-exchange resins, copper and zinc-based alloys, activated carbon, manganese greensand, zeolites, glassy- or glass-based solid-state combination medias, and combinations thereof. In certain cases, the non-dissolving media 330 may be configured or designed to remove dissolved minerals from a water stream. For example, the non-dissolving media may be configured or designed to remove calcium and magnesium ions from a water stream to help prevent corrosion and the accumulation of limescale in a water supply system. As an additional example, the non-dissolving media 330 may be configured or designed to inhibit the formation of magnesium crystals and/or calcium crystals that can lead to scale accumulation in a water supply system. In some instances, the non-dissolving media 330 may be configured or designed to agitate and aerate the water flowing through the carbon block 302. In certain instances, the non-dissolving media 330 may also be configured or designed to inhibit growth of bacteria within the carbon filtration assembly 300.

In some instances, the non-dissolving media 330 may be provided in the form of one or more beads, granules, pellets, particles, and combinations thereof. For example, the non-dissolving media 330 may be provided as one or more beads 331. In such instances, the one or more beads 331 may include at least a first bead 332, a second bead 334, and a third bead 336. It is to be appreciated that the non-dissolving media 330 may include a single bead, two beads, or more than three beads. In addition, each of the one or more beads 331 may include the same chemically active substance (e.g., phosphate) or a first portion of the one or more beads 331 may include a first chemically active substance and other portions of the one or more beads 331 may include other chemically active substances. In various instances, if provided, the phosphate may help inhibit the formation of scale in water-carrying pipes downstream of the carbon filtration assembly 300.

The flow of water through the carbon filtration assembly 300 may result in the non-dissolving media 330 moving within the channel 320. To help retain the non-dissolving media 330 in the channel 320, the non-dissolving media 330 may be positioned upstream of the baffle 306 relative to the direction of fluid flow through the channel 320. For example, the baffle 306 may be positioned in the channel 320 between the non-dissolving media 330 and the end cap 304 (see, e.g., FIG. 8) to help prevent the non-dissolving media 330 from entering the end cap 304.

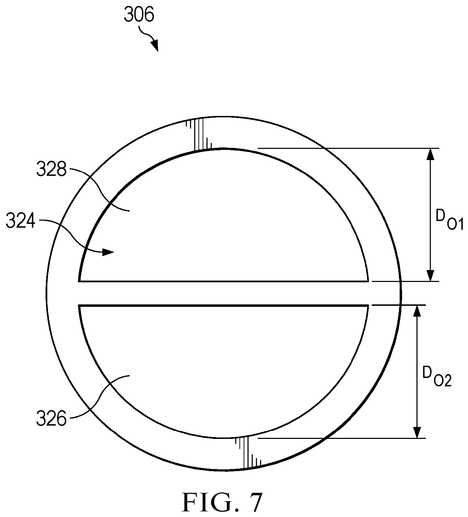

As shown in FIG. 6, the non-dissolving media 330 may be imparted with a bead diameter D_{Media}. In comparison, the one or more baffle openings 324 may be imparted with an opening diameter D_{O}, shown as D₀₁ and/or D₀₂ in FIG. 7. More particularly, the bead diameter D_{Media} may be imparted with a fourth value and the opening diameter Do may be imparted with a fifth value that is substantially the same as or smaller than the fourth value. When the fourth value of the bead diameter D_{Media} is substantially the same as or greater than the fifth value of the opening diameter D_{O}, the non-dissolving media 330 may be partially, substantially, or completely prevented from passing through the one or more baffle openings 324 provided in the surface 323. In turn, this may help prevent the non-dissolving media 330 from entering the end cap 304.

In certain instances, the fourth value of the bead diameter D_{Media} may be imparted with a value of about 0.1 millimeters to about 10 millimeters (or 0.1 millimeters to 10 millimeters), although the fourth value may be less than or greater than these values. For example, D_{Media} may be imparted with a fourth value of at least about 0.1 millimeters, or at least about 0.25 millimeters, or at least about 0.5 millimeters, or at least about 0.75 millimeters, or at least about 1 millimeter, or at least about 2 millimeters, or at least about 3 millimeters, or at least about 4 millimeters, or at least about 5 millimeters, or at least about 6 millimeters, or at least about 7 millimeters, or at least about 8 millimeters, or at least about 9 millimeters, or no more than 10 millimeters. In other instances, D_{Media} may be imparted with a fourth value of at least 0.1 millimeters, or at least 0.25 millimeters, or at least 0.5 millimeters, or at least 0.75 millimeters, or at least 1 millimeter, or at least 2 millimeters, or at least 3 millimeters, or at least 4 millimeters, or at least 5 millimeters, or at least 6 millimeters, or at least 7 millimeters, or at least 8 millimeters, or at least 9 millimeters, or no more than 10 millimeters.

In some cases, the beads of the non-dissolving media 330 may be uniform or substantially uniform in size. In such instances, the opening diameter D_{O} may be imparted with a fifth value that is at least about 1% to no more than about 99% of the fourth value of the bead diameter D_{Media} (or at least 1% to no more than about 99% of the fourth value of the bead diameter D_{Media}), although the fifth value may be somewhat less than or somewhat greater than these values. In other such instances, the opening diameter D_{O} may be imparted with a fifth value that is at least about 10% to no more than about 90% of the fourth value of the bead diameter D_{Media} (or at least 10% to no more than about 90% of the fourth value of the bead diameter D_{Media}). For example, the opening diameter D_{O} may be imparted with a fifth value that is at least about 1%, or at least about 5%, or at least about 10%, or at least about 15%, or at least about 20%, or at least about 25%, or at least about 30%, or at least about 35%, or at least about 40%, or at least about 45%, or at least about 50%, or at least about 55%, or at least about 60%, or at least about 65%, or at least about 70%, or at least about 75%, or at least about 80%, or at least about 85%, or at least about 90%, or at least about 95%, or no more than about 99% of the fourth value of the bead diameter D_{Media}. As an additional example, the opening diameter D_{O} may be imparted with a fifth value that is at least 1%, or at least 5%, or at least 10%, or at least 15%, or at least 20%, or at least 25%, or at least 30%, or at least 35%, or at least 40%, or at least 45%, or at least 50%, or at least 55%, or at least 60%, or at least 65%, or at least 70%, or at least 75%, or at least 80%, or at least 85%, or at least 90%, or at least 95%, or no more than 99% of the fourth value of the bead diameter D_{Media}.

In certain cases, the beads or particles of the non-dissolving media 330 may not be uniform in size. In such instances, the bead diameter D_{Media} of the non-dissolving media may be imparted with a range of values instead of a single value. For example, in some instances, the beads of the non-dissolving media 330 may not be imparted with a uniform diameter. In such instances, the smallest beads of the non-dissolving media 330 may be imparted a value D_{Media, min}, which may represent the smallest value of the bead diameter DMedia. In such instances, the opening diameter Do may be imparted with a fifth value associated with the value of D_{Media, min}. For example, the opening diameter D_{O} may be imparted with a fifth value that is substantially equal to or less than the value D_{Media, min}. In such instances, the opening diameter Do may be imparted with a fifth value that is at least about 1% to no more than about 99% of the value of D_{Media, min} (or at least 1% to no more than about 99% of the value of D_{Media, min}), although the fifth value may be somewhat less or somewhat greater than these values. In other such instances, the opening diameter D_{O} may be imparted with a fifth value that is at least about 10% to no more than about 90% of the value of D_{Media, min} (or at least 10% to no more than about 90% of the value of D_{Media, min}). For example, the opening diameter Do may be imparted with a fifth value that is at least about 1%, or at least about 5%, or at least about 10%, or at least about 15%, or at least about 20%, or at least about 25%, or at least about 30%, or at least about 35%, or at least about 40%, or at least about 45%, or at least about 50%, or at least about 55%, or at least about 60%, or at least about 65%, or at least about 70%, or at least about 75%, or at least about 80%, or at least about 85%, or at least about 90%, or at least about 95%, or no more than about 99% of the value of D_{Media, min}. As an additional example, the opening diameter Do may be imparted with a fifth value that is at least 1%, or at least 5%, or at least 10%, or at least 15%, or at least 20%, or at least 25%, or at least 30%, or at least 35%, or at least 40%, or at least 45%, or at least 50%, or at least 55%, or at least 60%, or at least 65%, or at least 70%, or at least 75%, or at least 80%, or at least 85%, or at least 90%, or at least 95%, or no more than 99% of the value of D_{Media,} min.

In certain instances, the fifth value of the opening diameter D_{O} may be imparted with a value of about 0.1 millimeters to about 10 millimeters (or 0.1 millimeters to 10 millimeters), although the fifth value may be somewhat less or greater than these values. For example, the opening diameter D_{O} may be imparted with a fifth value of at least about 0.1 millimeters, or at least about 0.25 millimeters, or at least about 0.5 millimeters, or at least about 0.75 millimeters, or at least about 1 millimeter, or at least about 2 millimeters, or at least about 3 millimeters, or at least about 4 millimeters, or at least about 5 millimeters, or at least about 6 millimeters, or at least about 7 millimeters, or at least about 8 millimeters, or at least about 9 millimeters, or no more than 10 millimeters. In other instances, the opening diameter D_{O} may be imparted with a fifth value of at least 0.1 millimeters, or at least 0.25 millimeters, or at least 0.5 millimeters, or at least 0.75 millimeters, or at least 1 millimeter, or at least 2 millimeters, or at least 3 millimeters, or at least 4 millimeters, or at least 5 millimeters, or at least 6 millimeters, or at least 7 millimeters, or at least 8 millimeters, or at least 9 millimeters, or no more than 10 millimeters.

While the one or more baffle openings 324 depicted in FIGS. 4-7 are substantially the same shape, the one or more baffle openings 324 need not be imparted with the same shape. For example, the first baffle opening 326 may be provided in a semi-circular shape while the second baffle opening 328 may be provided in a circular shape. In addition, even when each of the one or more baffle openings 324 are provided in the same shape (e.g., the semi-circular shapes of the first baffle opening 326 and the second baffle opening 328), the one or more baffle openings 324 need not be provided in the same size. For example, the first baffle opening 326 may be imparted with a first baffle opening diameter D_{O1} and the second baffle opening 328 may be imparted with a second baffle opening diameter D_{O2}. In certain instances, the first baffle opening diameter D_{O1} may be smaller or larger than the second baffle opening diameter D_{O2}, although in other instances the first baffle opening diameter D_{O1} and the second baffle opening diameter D_{O2} may be substantially the same size (or the same size). It is to be understood that the teachings described herein with reference to the first baffle opening 326 and the second baffle opening 328 may also apply to a baffle including more than two baffle openings (e.g., a baffle 1100 described with reference to FIGS. 11A and 11B).

Turning to FIG. 8, various elements of the carbon filtration assembly 300 are further illustrated. For example, the end cap 304 may further include a projection 400 having a bore 402 that is configured to be in fluid communication with the opening 316 of the end cap 304. The projection 400 may be integrally formed with or coupled to the base of the end cap 304. The projection 400 may be provided in the form of a substantially hollow cylinder extending downwardly and away from the base 312 that is positioned near a center portion of the end cap 304. In other cases, the projection 400 may be provided in other shapes and may be positioned elsewhere on the end cap 304. When the end cap 304 is coupled to the carbon block 302, the projection 400 may extend into and be received by the channel 320. The bore 402 may provide a fluid flow path for filtered water to enter the end cap 304 before the filtered water exits the end cap 304 via the opening 316. In certain instances, the projection 400 may be omitted.

In addition, a plug or an end cap may be coupled to the first end 308 of the carbon block 302. For example, a plug 404 may be coupled to the first end 308 of the carbon block 302 and received at least partially into the channel 320. For example, the plug 404 may be secured within the channel 320 via a friction fit, or the plug 404 may be otherwise secured in the channel 320 (e.g., via an adhesive). The plug 404 may help prevent the non-dissolving media 330 from exiting the channel 320 via the first end 308 of the carbon block 302. In addition, the plug 404 may help prevent water from flowing into the channel 320 without first passing through the body 307 of the carbon block 302. In certain cases, the plug 404 may be omitted from the carbon filtration assembly 300.

The carbon filtration assembly 300 as depicted in FIG. 8 is arranged in an upright configuration. Generally, as water flows through the carbon block 302, the water may flow from the first end 308 to the second end 310. As such, the non-dissolving media 330 may be positioned upstream of the baffle 306 and the end cap 304, and the baffle 306 and the end cap 304 may be positioned downstream of the non-dissolving media 330. Alternatively, the baffle 306 may be positioned between the non-dissolving media 330 and the end cap 304. Thus, the baffle 306 may help prevent the non-dissolving media 330 from entering, jamming, clogging, or obstructing the end cap 304. In addition, the baffle 306 may help prevent the non-dissolving media 330 from abutting or being positioned proximate to the end cap 304. Thus, the baffle 306 may help reduce or substantially eliminate a pressure drop associated with using a non-dissolving media within the carbon block 302 of the carbon filtration assembly 300.

When the carbon filtration assembly 300 is arranged in an upright configuration and water is provided to the carbon block 302, the baffle 306 may move or "float" upwardly and downwardly within the channel 320. This may help ensure that the baffle 306 does not impede the flow of water through the carbon filtration assembly 300 while also allowing the non-dissolving media 330 to move within the channel 320 of the carbon block 302. It is to be appreciated that the carbon filtration assembly 300 may be arranged in a virtually limitless number of configurations and that the baffle 306 may move within the channel 320 in directions that are substantially parallel to the channel 320 regardless of the configuration or orientation of the carbon filtration assembly 300.

Referring still to FIG. 8, the carbon block 302 may be imparted with a block length L_{Block}. The block length L_{Block} may be the linear length between the first end 308 and the second end 310 of the carbon block 302. In various instances, a length of the channel 320 (i.e., a linear distance of the channel 320 from the first end 308 to the second end 310 of the carbon block 302) may have the same or substantially the same value as the block length L_{Block}.

Turning to FIG. 9, the baffle 306 may further include a first baffle end 500 positioned opposite a second baffle end 502. A first side 504 and a second side 506 may extend from the first baffle end 500 and to the second baffle end 502. It is to be appreciated that the first side 504 and the second side 506 may be integrally provided as part of a sidewall 508 extending between the first baffle end 500 and the second baffle end 502. In some instances, the baffle 306 may be imparted with a baffle length L_{Baffle}. The baffle length L_{Baffle} may be determined by measuring the linear distance between the first baffle end 500 and the second baffle end 502. In addition, the baffle 306 may be imparted with a baffle diagonal C_{Baffle}. The baffle diagonal C_{Baffle} may be determined by measuring the linear distance from a first point defined by the intersection of the first baffle end 500 and the second side 506 and a second point defined by the intersection of the second baffle end 502 and the first side 504. Alternatively, the baffle diagonal C_{Baffle} may be determined by measuring the linear distance from a third point defined by the intersection of the first baffle end 500 and the first side 504 and a fourth point defined by the intersection of the second baffle end 502 and the second side 506.

The baffle length L_{Baffle} may be imparted with a sixth value that is related to the block length L_{Block} of the carbon block 302 and the channel radius R₂ of the channel 320. For example, the sixth value of the baffle length L_{Baffle} may be selected from a range of values associated with the overall length of the carbon block 302 and the overall diameter of the channel 320 (i.e., the block length L_{Block} and the channel radius R₂). For example, the maximum value of the baffle length L_{Baffle} may not exceed the block length L_{Block}, and thus, the baffle length L_{Baffle} may be imparted with a sixth value that is less than the value of the block length L_{Block}. In some instances, the baffle length L_{Baffle} may be defined with respect to the block length L_{Block}. For example, the baffle length L_{Baffle} may be imparted with a sixth value that is about 5% to about 75% of the block length L_{Block} (or 5% to 75% of the block length L_{Block}), although the sixth value may be somewhat less or even greater than these values. In certain cases, the baffle length L_{Baffle} may be imparted with a sixth value that is about 5% to about 50%, or about 5% to about 30%, or 5% to 50%, or 5% to 30% of the block length L_{Block}. For example, the baffle length L_{Baffle} may be imparted with a sixth value that is at least about 5%, or at least about 10%, or at least about 15%, or at least about 20%, or at least about 25%, or at least about 30%, or at least about 35%, or at least about 40%, or at least about 45%, or at least about 50%, or at least about 55%, or at least about 60%, or at least about 65%, or at least about 70%, or at least about 75%, or no more than about 85% of the block length L_{Block}. As an additional example, the baffle length L_{Baffle} may be imparted with a sixth value that is at least 5%, or at least 10%, or at least 15%, or at least 20%, or at least 25%, or at least 30%, or at least 35%, or at least 40%, or at least 45%, or at least 50%, or at least 55%, or at least 60%, or at least 65%, or at least 70%, or at least 75%, or no more than 85% of the block length L_{Block}.

In certain cases, the block length L_{Block} may be imparted with a seventh value of about 7 centimeters to about 60 centimeters (or 7 centimeters to 60 centimeters), although the block length L_{Block} is not particularly limited and may be somewhat smaller or even larger than these values. For example, the block length L_{Block} may be imparted with a seventh value of at least about 7 centimeters, or at least about 10 centimeters, or at least about 15 centimeters, or at least about 20 centimeters, or at least about 25 centimeters, or at least about 30 centimeters, or at least about 35 centimeters, or at least about 40 centimeters, or at least about 45 centimeters, or at least about 50 centimeters, or at least about 55 centimeters, or at least about 60 centimeters. As an additional example, the block length L_{Block} may be imparted with a seventh value of at least 7 centimeters, or at least 10 centimeters, or at least 15 centimeters, or at least 20 centimeters, or at least 25 centimeters, or at least 30 centimeters, or at least 35 centimeters, or at least 40 centimeters, or at least 45 centimeters, or at least 50 centimeters, or at least 55 centimeters, or at least 60 centimeters.

In addition, in various instances, a minimum value of the baffle length L_{Baffle} may be determined by the equation $\sqrt{\left(2∗{R}_{2}\right) - {D}_{Baffle}}$*.* For example, the sixth value of the baffle length L_{Baffle} may be substantially equal to or greater than the value obtained from the equation $\sqrt{\left(2∗{R}_{2}\right) - {D}_{Baffle}}$*.* Furthermore, in certain instances, the baffle diagonal C_{Baffle} may be imparted with a seventh value that is substantially equal to or greater than the inner diameter of the carbon block 302 (i.e., a value of twice the channel radius R₂).

Defining the minimum baffle length L_{Baffle} and the baffle diagonal C_{Baffle} in relation to the channel radius R₂, as previously described, may help prevent the baffle from flipping within the channel 320 and/or becoming lodged horizontally in the channel 320 as water flows through the channel 320.

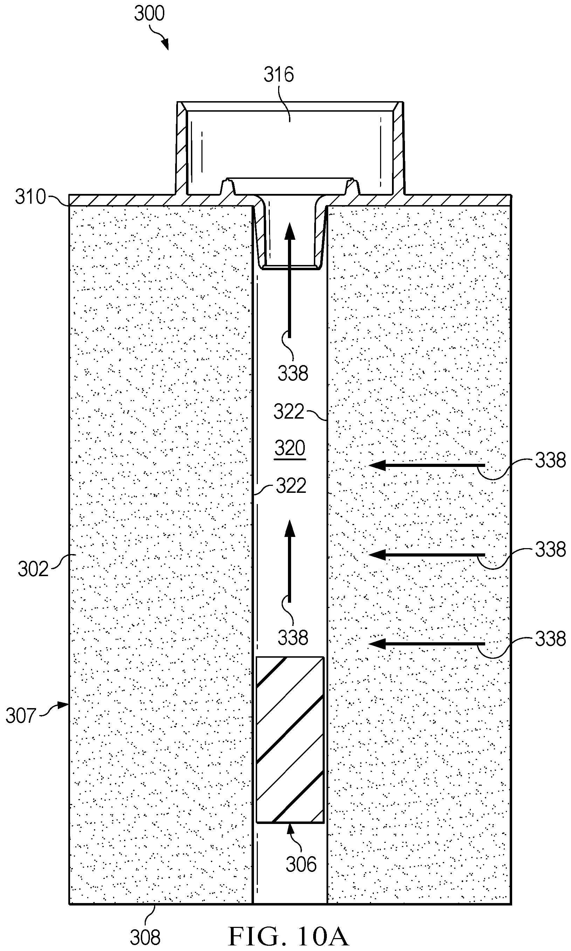

Together, FIGS. 10A-10C illustrate an example of movement of the baffle 306 within the channel 320 of the carbon block 302 as the carbon filtration assembly 300 is in use. The flow of water through the carbon block 302 is schematically represented by the arrows (i.e., arrows 338) positioned in the interior of the carbon block 302 and the channel 320. It is to be appreciated that only a portion of the water flowing through the carbon filtration assembly is represented by the arrows 338, and that the non-dissolving media 330 is not depicted in FIGS. 10A-10C for the purposes of clarity. In addition, water may be introduced to and flow through the carbon block 302 in other manners than those described herein.

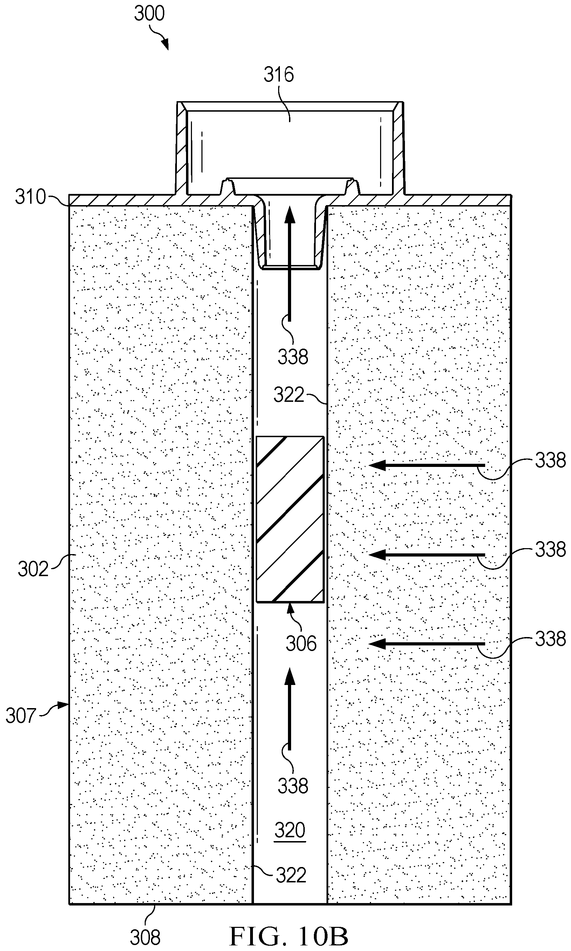

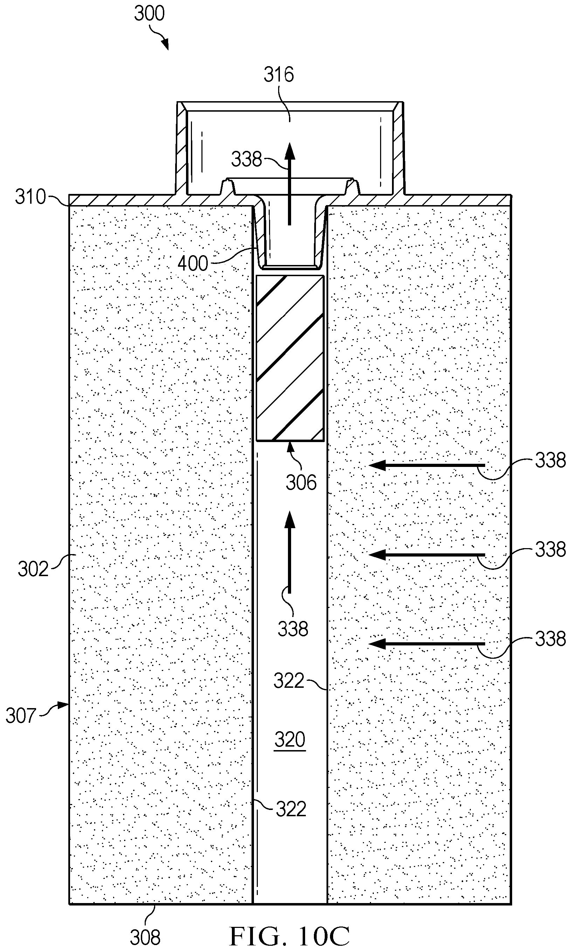

FIGS. 10A, 10B, and 10C represent the carbon block 302 at a first time period, a second time period, and a third time period, respectively. The second time period may occur after the first time period, and the third time period may occur after the second time period. Turning first to FIG. 10A, when the carbon filtration assembly 300 receives a water stream, the water stream may initially pass through the body 307 of the carbon block 302. Once the water stream passes through the body 307, the water stream may exit the body 307 via the interior wall 322 and enter the channel 320. The force of the water stream flowing through the channel 320 (e.g., the force applied to the baffle 306 as the water stream flows through and around the baffle 306) may cause the baffle 306 to begin moving away from the first end 308 and toward the second end 310. Additionally, the baffle 306 may float within the channel 320 due to a difference in the densities of the baffle 306 and the water stream. As the water stream flows through the channel 320, the water stream may flow around the baffle 306 and through the baffle gap R' (see FIG. 5). Further, the water stream may pass through the baffle 306 and exit the baffle 306 via the one or more baffle openings 324 provided in the surface 323 of the baffle 306 (see, e.g., FIG. 4). As the flow of the water stream continues, the baffle 306 may move away from the first end 308, as shown in FIG. 10B. Eventually, as the water stream continues flowing through the channel 320, the baffle 306 may be moved even further upwardly through the channel 320 such that the baffle 306 may be positioned proximate or adjacent to the second end 310 of the carbon block 302 (see FIG. 10C). Eventually, the upward motion of the baffle 306 may be stopped by the projection 400. When the flow of the water stream lessens or ceases, the baffle 306 may move away from the second end 310 and may eventually return to be positioned proximate or adjacent to the first end 308.

As compared to a baffle that does not move within the channel 320, the baffle 306 may help disperse the non-dissolving media 330 throughout a larger volume of the channel 320. In turn, this may help expose the water stream flowing through the carbon block 302 to the non-dissolving media 330 such that additional components may be removed from and/or added to the water stream more effectively by the non-dissolving media 330.

Together, FIGS. 11A-12C illustrate additional implementations of flow distribution baffles that may be used in the carbon filtration assembly 300. As depicted in FIG. 11A, a baffle 1100 is provided in the form of a baffle body 1102 imparted with the shape of a cylindrical tube, although the baffle body 1102 may also be provided in other shapes. The baffle body 1102 may have a first baffle end 1104 disposed opposite a second baffle end 1106. A sidewall 1108 may extend from the first baffle end 1104 to the second baffle end 1106 and may define a bore 1109 that extends from the first baffle end 1104 to the second baffle end 1106. In certain instances, the sidewall 1108 may be non-porous, or the sidewall 1108 may be porous. In some instances, the sidewall 1108 may include one or more holes extending through the sidewall 1108. Furthermore, the baffle body 1102, including the sidewall 1108, may be water-permeable, semi-permeable to water, or non-permeable to water. A cover 1110 having a plurality of baffle openings 1112 may be coupled to or integrally formed with the sidewall 1108. In addition, the cover 1110 may be positioned on the second baffle end 1106, although in alternative instances the cover 1110 may also be positioned on the first baffle end 1104.

Generally, the baffle 1100 may have a substantially similar structure and function as the baffle 306 described with reference to FIGS. 3A-10C. For example, elements of the baffle 1100 having a similar name to elements of the baffle 306 may have substantially the same structure and function as those elements described with reference to the baffle 306. However, unlike the baffle 306, the baffle 1100 may include more baffle openings than the baffle 306. More particularly, the baffle 1100 may include more than two baffle openings. As shown in FIG. 11A, the cover 1110 may be provided in the form of a mesh or a screen mesh in which the plurality of baffle openings 1112 are disposed.

Turning to FIG. 11B, another instance of a cover (i.e., a cover 1150) configured or designed to be coupled to or integrally formed with the baffle 1100 is provided. Like the cover 1110, the cover 1150 may include a plurality of baffle openings 1152. However, in comparison to the cover 1110, the cover 1150 may include fewer baffle openings. In addition, the arrangement of the plurality of baffle openings 1152 may be different in the cover 1150 than the arrangement of the plurality of baffle openings 1112 of the cover 1110. For example, the plurality of baffle openings 1152 may be provided in a different position in the cover 1150 than the plurality of baffle openings 1112 of the cover 1110. In addition, a density of openings provided in the plurality of baffle openings 1152 (i.e., the number of openings per a defined unit of surface area) may be less in the cover 1150 than in the cover 1110.

It is to be understood that the baffle 1100 and the covers 1110, 1150 are provided for the purpose of being illustrative examples only and that the baffle 1100 (and thus the covers 1110, 1150) may be provided in other forms consistent with the teachings herein.

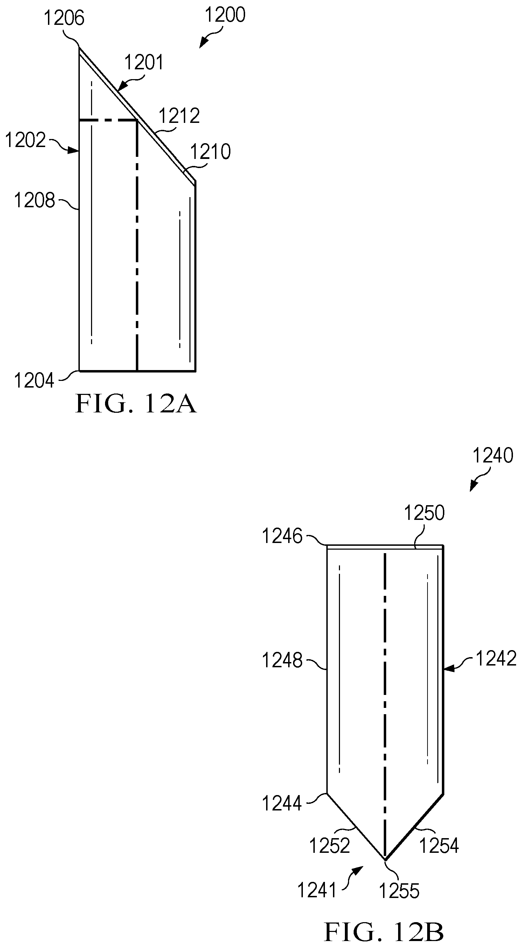

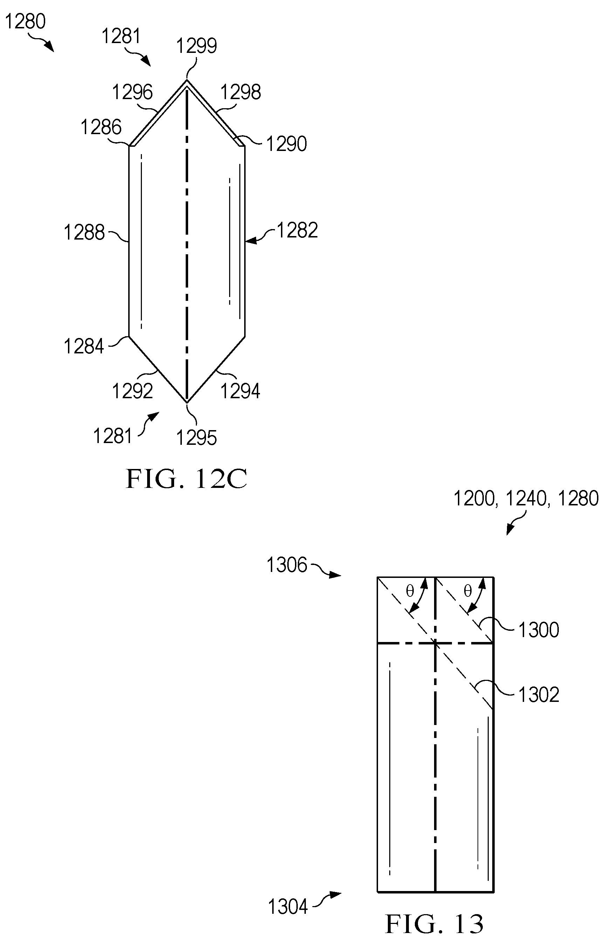

FIGS. 12A-12C illustrate implementations of baffles including one or more angled ends. It is to be understood that the baffles of FIGS. 12A-12C may have substantially the same structure and function as the baffles 306, 1100, described with reference to FIGS. 3A-10C and FIGS. 11A and 11B, respectively. However, unlike the baffles 306, 1100, a baffle 1200 of FIG. 12A, a baffle 1240 of FIG. 12B, and a baffle 1280 of FIG. 12C may include one or more angled ends (i.e., one or more angled ends 1201, 1241, 1281).

To begin, the baffle 1200 of FIG. 12A may be provided in the form of a baffle body 1202 having a first baffle end 1204 disposed opposite a second baffle end 1206. A sidewall 1208 may extend from the first baffle end 1204 and to the second baffle end 1206. A cover 1210 having one or more baffle openings (not depicted) may be coupled to or integrally formed with either of the first baffle end 1204 or the second baffle end 1206. The one or more angled ends 1201 may be provided on the first baffle end 1204 and/or the second baffle end 1206. In the illustrated instance, the second baffle end 1206 of the baffle 1200 may include a first angled surface 1212. The first angled surface 1212 may be formed by cutting the second baffle end 1206, as further described with reference to FIG. 13.

As shown in FIG. 12B, the baffle 1240 of FIG. 12A may be provided in the form of a baffle body 1242 having a first baffle end 1244 disposed of opposite a second baffle end 1246. A sidewall 1248 may extend from the first baffle end 1244 and to the second baffle end 1246. A cover 1250 having one or more baffle openings (not depicted) may be coupled to or integrally formed with either of the first baffle end 1244 or the second baffle end 1246. The one or more angled ends 1241 may be provided on the first baffle end 1244 and/or the second baffle end 1246. In the illustrated instance, the first baffle end 1244 of the baffle 1240 may include a first angled surface 1252 and a second angled surface 1254. The first and second angled surfaces 1252, 1254 may join at a point 1255 provided on the first baffle end 1244, although the first and second angled surfaces 1252, 1254 may also be arranged to form a curved shape at the first baffle end 1244 or any other shape. The point 1255 may be positioned at or near a center of the first baffle end 1244, although the point 1255 may also be positioned elsewhere on the first baffle end 1244. The first and second angled surfaces 1252, 1254 may be formed by cutting the first baffle end 1244, as further described with reference to FIG. 13.

Turning to FIG. 12C, the baffle 1280 may be provided in the form of a baffle body 1282 having a first baffle end 1284 disposed opposite a second baffle end 1286. A sidewall 1288 may extend from the first baffle end 1284 and to the second baffle end 1286. A cover 1290 having one or more baffle openings (not depicted) may be coupled to or integrally formed with either the first baffle end 1284 or the second baffle end 1286. The one or more angled ends 1281 may be provided on the first baffle end 1284 and/or the second baffle end 1286. In the illustrated instance, the first baffle end 1284 may include a first angled surface 1292 and a second angled surface 1294. In addition, the second baffle end 1286 may include a third angled surface 1296 and a fourth angled surface 1298. The first and second angled surfaces 1292, 1294 may join at a point 1295 provided on the first baffle end 1284, and the third and fourth angled surfaces 1296, 1298 may join at a point 1299 provided on the second baffle end 1286. Alternatively, the first and second angled surfaces 1292, 1294 and the third and fourth angled surfaces 1296, 1298 may also be arranged to form a curved shape at the first baffle end 1284 and the second baffle end 1286, respectively, or any other shape. The point 1295 and the point 1299 may be positioned at or near a center of the first baffle end 1284 and the second baffle end 1286, respectively, although the point 1295 and the point 1299 may also be positioned elsewhere on the first baffle end 1284 and the second baffle end 1286. The first, second, third, and fourth angled surfaces 1292, 1294, 1296, 1298 may be formed by cutting the first and second baffle ends 1284, 1286, as further described with reference to FIG. 13.

As illustrated in FIG. 13, first and second cut lines 1300, 1302 visually represent potential locations where one or more cuts may be made (e.g., via machining) in the substantially flat second end 1306 to create the one or more angled ends 1201, 1241, 1281 of the baffles 1200, 1240, 1280 of FIGS. 12A-12C. The first and second cut lines 1300, 1302 may be positioned with respect to the flat second end 1306 at an angle θ to create the one or more angled ends 1201, 1241, 1281 that are imparted with the angle θ. The angle θ may be defined as the space (measured in degrees) between a first cut line 1300 or a second cut line 1302 and the substantially flat second end 1306. The first cut line 1300 may be differentiated from the second cut line 1302 by the position at which the cut line adjoins the flat second end 1306. For example, the first cut line 1300 may adjoin the second flat end substantially at a center of the flat second end 1306, while the second cut line 1302 may adjoin the flat second end 1306 at either end of the flat second end 1306. In alternative instances, the first and second cut lines 1300, 1302 may be positioned in other locations with respect to the flat second end 1306.

While not depicted in FIG. 13, it is to be understood that the first and second cut lines 1300, 1302 may also be provided on the substantially flat first end 1304 of the baffles 1200, 1240, 1280.

In various instances, the angle θ may be imparted with an eighth value of at least about 0° to no more than about 89.5° (or at least 0° to 89.5°), or about 5° to about 80° (or 5° to 80°), or about 10° to about 70° (or 10° to 70°), or about 20° to about 60° (or 20° to 60°), or about 25° to about 50° (or 25° to 50°). For example, the angle θ may be imparted with an eighth value of at least about 0°, or at least about 5°, or at least about 10°, or at least about 15°, or at least about 20°, or at least about 25°, or at least about 30°, or at least about 35°, or at least about 40°, or at least about 45°, or at least about 50°, or at least about 55°, or at least about 60°, or at least about 65°, or at least about 70°, or at least about 75°, or at least about 80°, or at least about 85°, or no more than about 89.5°. For other examples, the angle θ may be imparted with an eighth value of at least 0°, or at least 5°, or at least 10°, or at least 15°, or at least 20°, or at least 25°, or at least 30°, or at least 35°, or at least 40°, or at least 45°, or at least 50°, or at least 55°, or at least 60°, or at least 65°, or at least 70°, or at least 75°, or at least 80°, or at least 85°, or no more than 89.5°. As such, it is to be understood that the arrangement of the first and second cut lines 1300, 1302 may vary based on the selection of the eighth value.

When the eighth value of the angle θ is about 0° (or 0°), an end of the baffle may be substantially flat or flat (e.g., see the first baffle end 1204 of FIG. 12A). In addition, when the angle θ is greater than about 0° (or greater than 0°), an end of the baffle may be "angled" or have at least one angled surface (e.g., see the second baffle end 1206 of FIG. 12A and the first baffle end 1244 of FIG. 12B).

In various instances, a single cut may be made at an end of a baffle to create an angled end. For example, the baffle 1200 of FIG. 12A may be created by making a single cut through the second baffle end 1206. In other instances, more than one cut (e.g., two cuts) may be made on an end of a baffle to create an angled end. For example, the baffle 1240 of FIG. 12B may be created by making two cuts on the first baffle end 1244. In other instances, baffles with different shapes than those depicted in FIGS. 12A-12C may be created by varying the number of cuts and the angle θ.

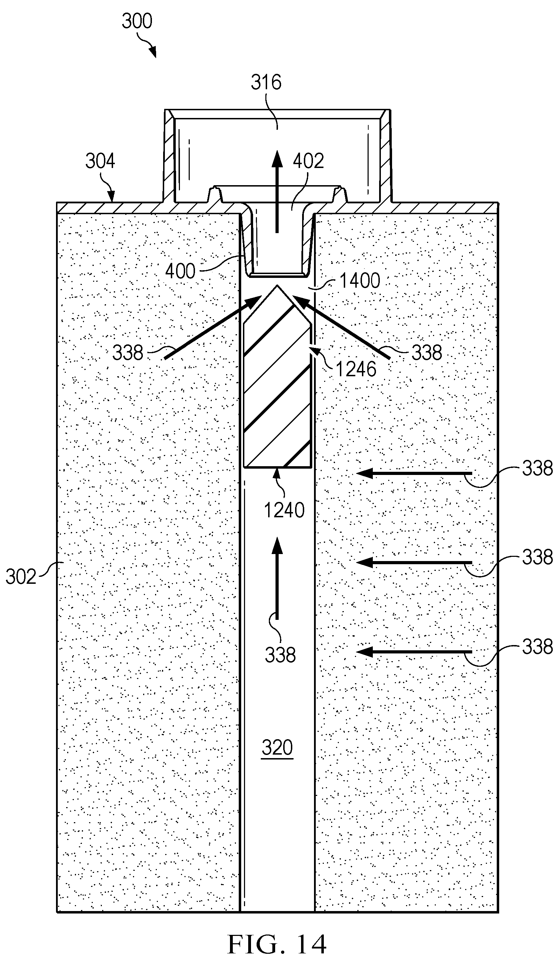

Turning to FIG. 14, the carbon filtration assembly 300 may utilize a baffle having at least one angled end. For example, the baffle 1240 may be provided in the channel 320 of the carbon block 302. The baffle 1240 may be arranged such that the angled end (i.e., the first baffle end 1244) is positioned closer to the end cap 304 than the second baffle end 1246. The angled nature of the first baffle end 1244 may provide an additional fluid flow path for the water stream to enter the end cap 304 as compared to a baffle having substantially flat ends because a gap 1400 may be provided in the channel 320 between the first baffle end 1244 and the projection 400 of the end cap 304. In some instances, for example, after the water stream flows through the body 307 of the carbon block, the water stream may enter the channel 320 in the gap 1400. If the water is provided to the gap 1400, a fluid flow path is provided through the gap 1400 and to the bore 402 of the projection 400. As such, the water can exit the channel 320 and enter the end cap 304 by flowing through the gap 1400 and entering the projection 400. Thus, a baffle having at least one angled end may allow water to flow to the end cap 304 not only through the baffle but also by flowing around the baffle without first passing through the baffle. Thus, a baffle having at least one angled end (e.g., the baffles 1200, 1240, 1280) may be configured or designed to facilitate a higher throughput of water through the carbon filtration assembly 300 since the baffle having at least one angled end is designed for higher water flow rates.

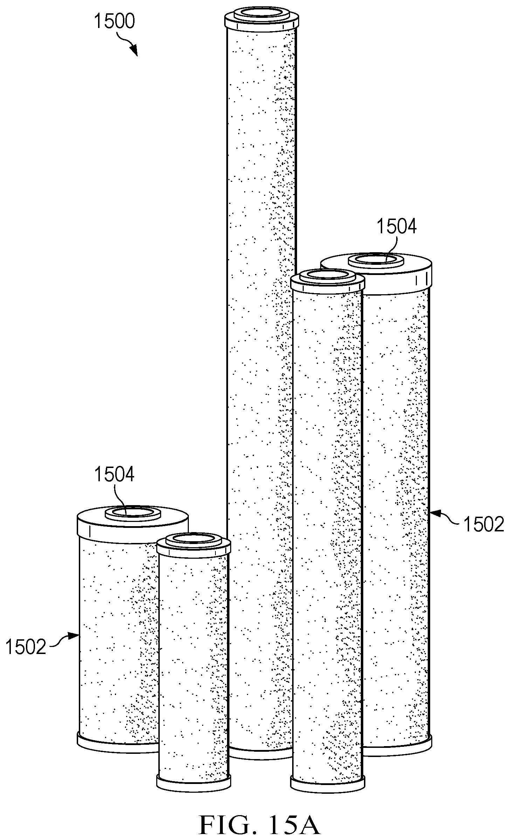

Together, FIGS. 15A-15D illustrate further instances of filters configured or designed to filter one or more components from a water stream, in which the filters may include any of the flow distribution baffles (and variations thereof) discussed with reference to FIGS. 1-14. More particularly, the filters provided in FIGS. 15A-15D may utilize any of the baffles 306, 1100, 1200, 1240, 1280 described with reference to FIGS. 4-14, and any variations thereof. It is to be appreciated that the filters described with reference to FIGS. 15A-15D may be imparted with any of the geometries described with reference to the carbon block 302 of FIGS. 4-14 and that a non-dissolving media (e.g., the non-dissolving media 330 of FIG. 6) may be positioned within the filters.

Turning first to FIG. 15A, various carbon filters 1500 are each provided in the form of a body 1502 having a channel 1504 extending through the body 1502. The carbon filter 1500 may be similar in structure and function as compared to the carbon block 302 of FIG. 3A. For example, any of the baffles 306, 1100, 1200, 1240, 1280 described with reference to FIGS. 4-14 may be positioned within the channel 1504 and help retain a non-dissolving media (e.g., the non-dissolving media 330 of FIG. 6) within the channel 1504. However, unlike the carbon block 302, the body 1502 of the filter 1500 may be composed of a synthetic, cellulose-free fiber matrix upon which activated carbon is deposited. The synthetic, cellulose-free fiber matrix may offer increased sediment filtration as compared to filters that are not provided with the matrix. In certain cases, the filter 1500 may be provided as a PenTek CFB-Plus Series molded carbon block with a Fibredyne cellulose-free synthetic fiber matrix provided by Pentair plc of Golden Valley, Minnesota.

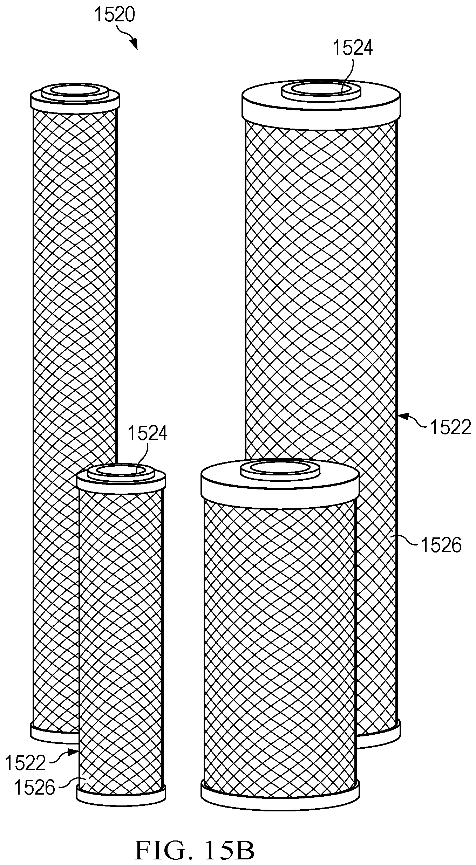

In FIG. 15B, various carbon filters 1520 are each provided in the form of a body 1522 having a channel 1524 extending through the body 1522. The carbon filter 1520 may be similar in structure and function as compared to the carbon block 302 of FIG. 3A. For example, any of the baffles 306, 1100, 1200, 1240, 1280 described with reference to FIGS. 4-14 may be positioned within the channel 1524 and help retain a non-dissolving media (e.g., the non-dissolving media 330 of FIG. 6) within the channel 1524. However, unlike the carbon block 302, the filter 1520 may include a polyolefin bilaminate pre-filter layer that at least partially surrounds a carbon block. The polyolefin bilaminate pre-filter may in some cases trap sediments flowing through the filter 1520, thereby helping to prevent the carbon block from becoming clogged with sediment particles. In addition, a polyethylene netting 1526 may be provided on an outer surface of the filter 1520 to provide additional structure and support for the polyolefin bilaminate pre-filter layer and/or the carbon block. In certain cases, the filter 1520 may be provided as a PenTek EP Series filter provided by Pentair plc of Golden Valley, Minnesota.

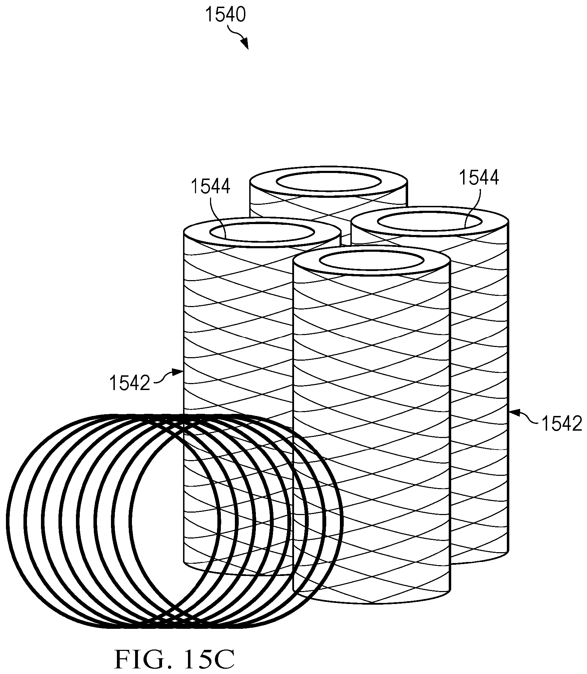

Turning to FIG. 15C, various water filters 1540 are each provided in the form of a body 1542 having a channel 1544 extending through the body 1542. The water filter 1540 may be similar in structure as compared to the carbon block 302 of FIG. 3A. For example, any of the baffles 306, 1100, 1200, 1240, 1280 described with reference to FIGS. 4-14 may be positioned within the channel 1544 and help retain a non-dissolving media (e.g., the non-dissolving media 330 of FIG. 6) within the channel 1544. However, unlike the carbon block 302, the water filter 1540 may be provided in the form of a string-wound filter configured or designed to filter sediments from a water stream. For example, the body 1542 of the filter 1540 may be formed of one or more polypropylene strings that are wrapped around the channel 1544. In certain instances, the body 1542 of the filter 1540 may be provided without a core. In certain cases, the filter 1540 may be provided as a Sediment Pre-Filter System Filter provided by Pentair plc of Golden Valley, Minnesota.

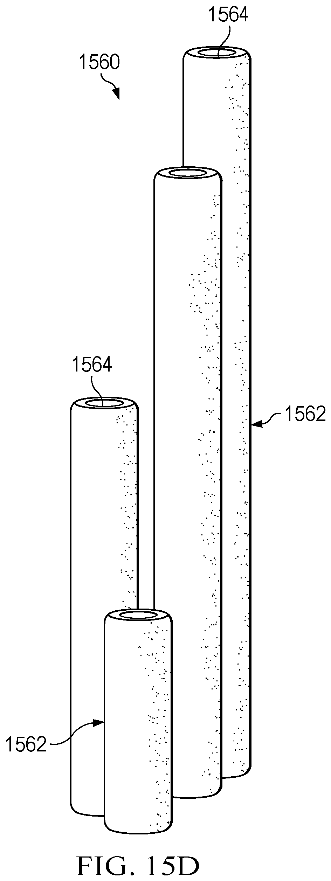

As shown in FIG. 15D, various water filters 1560 are each provided in the form of a body 1562 having a channel 1564 extending through the body 1562. The water filter 1560 may be similar in structure as compared to the carbon block 302 of FIG. 3A. For example, any of the baffles 306, 1100, 1200, 1240, 1280 described with reference to FIGS. 4-14 may be positioned within the channel 1564 and help retain a non-dissolving media (e.g., the non-dissolving media 330 of FIG. 6) within the channel 1564. However, unlike the carbon block 302, the water filter 1560 may be provided in the form of a melt-blown sediment filter configured or designed to filter dirt, rust, and other sediments from a water stream. For example, the body 1562 of the filter 1560 may be provided in the form of melt-blown polypropylene fibers. In certain instances, the body 1562 of the filter 1560 may be provided without a core. In certain cases, the filter 1560 may be provided as a PS Series Meltblown Polypropylene Sediment Cartridge provided by Pentair plc of Golden Valley, Minnesota.

The filters 1500, 1520, 1540, 1560 described with reference to FIGS. 15A-15D are intended to be non-limiting examples of additional filters that may utilize any of the flow distribution baffles described herein. For example, any of the baffles 306, 1100, 1200, 1240, 1280 described with reference to FIGS. 4-14 (and variations thereof) may be utilized in any filtration media provided in the form of a carbon block filter, a pre-coat filter, a Fibredyne filter, a loose media filter, a melt-blown filter, a poly-spun filter, a fiber-wound filter, or other radially or axially flowing water filter used in water filtration systems.

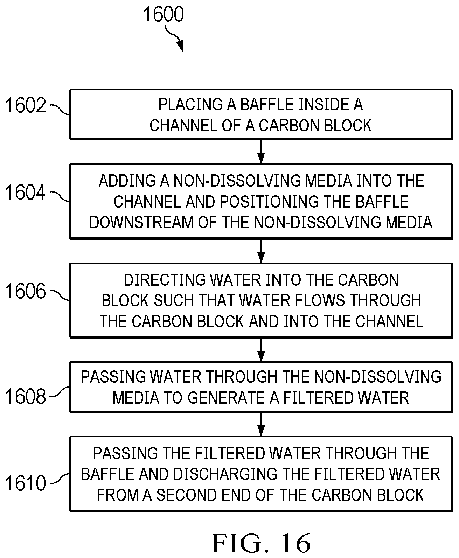

In various instances, a method 1600 of purifying water using a carbon filtration device or system is provided as illustrated in FIG. 16. While the method 1600 is presently described with respect to the carbon filtration assembly 300, it will be understood that the method 1600 may be utilized with any of a variety of water purification systems (e.g., the water purification systems 116, 200) and filters (e.g., the filters 1500, 1520, 1540, 1560), and any variations thereof described herein.

The method 1600 may include a first step 1602 of placing a baffle inside a channel of a carbon block, in which the channel extends from a first end of the carbon block and to a second end of the carbon block. The method 1600 may further include a second step 1604 of adding a non-dissolving media into the channel and positioning the baffle downstream of the non-dissolving media. In certain instances, the non-dissolving media may be selected from the group consisting of phosphate, polyphosphate, ion-exchange resins, copper- and zinc-based alloys, manganese greensand, zeolites, glassy- or glass-based solid-state combination medias, and combinations thereof. In addition, in some instances, the non-dissolving media may be provided in the form of beads, granules, pellets, particles, or other similar forms. In some cases, the non-dissolving media may be provided in the form of beads, and the beads may be imparted with a first diameter. In some cases, the baffle may be positioned between the non-dissolving media and an end cap in fluid communication with an outlet. In some such cases, the baffle can have one or more openings. Each opening of the one or more openings of the baffle may be imparted with a second diameter that is approximately the same as, somewhat smaller, or significantly smaller than the first diameter of the beads. In certain cases, a gap between the baffle and the channel may be imparted with a value that is approximately the same as, somewhat smaller, or significantly smaller than the first diameter of the beads of the non-dissolving media. Thus, the baffle may be configured or designed to help prevent the non-dissolving media from traveling past the baffle as the filtered water is generated by the water purification system. The end cap may be coupled to the second end of the carbon block.

The method 1600 may also include a third step 1606 of directing water into the carbon block such that the water flows through the carbon block and enters the channel.

The method 1600 may include a fourth step 1608 of passing the water through the non-dissolving media, thereby generating a filtered water. In certain cases, the water flows through the carbon block before being provided to the non-dissolving media. The method 1600 may further include a fifth step 1610 of passing the filtered water through the baffle and discharging the filtered water from the second end of the carbon block. For example, in some cases, the water may be discharged from the carbon block via the end cap coupled to the second end of the carbon block. In addition, after the filtered water is discharged from the carbon block, the filtered water may be further processed (e.g., provided to another filtration cartridge or another component of the water purification system) or the filtered water may be provided to an end user.

In some cases, the third step 1606 and fourth step 1608 may involve removing or filtering specific contaminants or substances from water flowing through the carbon block and the non-dissolving media to generate the filtered water. In such cases, the contaminants or substances may include VOCs, THMs, PFAS, heavy metals (e.g., iron, mercury, lead, arsenic), hardness-imparting ions (e.g., magnesium, calcium), chlorine, chlorine-containing compounds, and other dissolved particles. For example, the contaminants or substances may be selected from the group consisting of VOCs, THMs, PFAS, heavy metals, hardness-imparting compounds or ions, chlorine, chlorine-containing compounds, other dissolved particles, and combinations thereof. As an additional example, the contaminants or substances may be selected from the group consisting of VOCs, THMs, PFAS, heavy metals, hardness-imparting compounds or ions, chlorine, chlorine-containing compounds, and combinations thereof.

In other instances, the fourth step 1608 may include inhibiting the formation of scale in water-carrying pipes in fluid communication with the carbon filtration device. For example, the non-dissolving media may be configured or designed to inhibit the formation of magnesium and/or calcium crystals, the formation of which may lead to scale buildup in the water-carrying pipes. In some such cases, the non-dissolving media may be provided in the form of phosphate beads, granules, or pellets.

In various cases, the fifth step 1610 may include preventing the non-dissolving media from exiting through the second end of the carbon block (e.g., from entering and/or clogging the end cap coupled to the second end).

In certain instances, the method 1600 may include fewer steps or additional steps. In addition, the steps of the method 1600 may be performed in any order, and any of the steps of the method 1600 may be performed more than once. Further, any of the steps of the method 1600 outlined above may be omitted if desired.

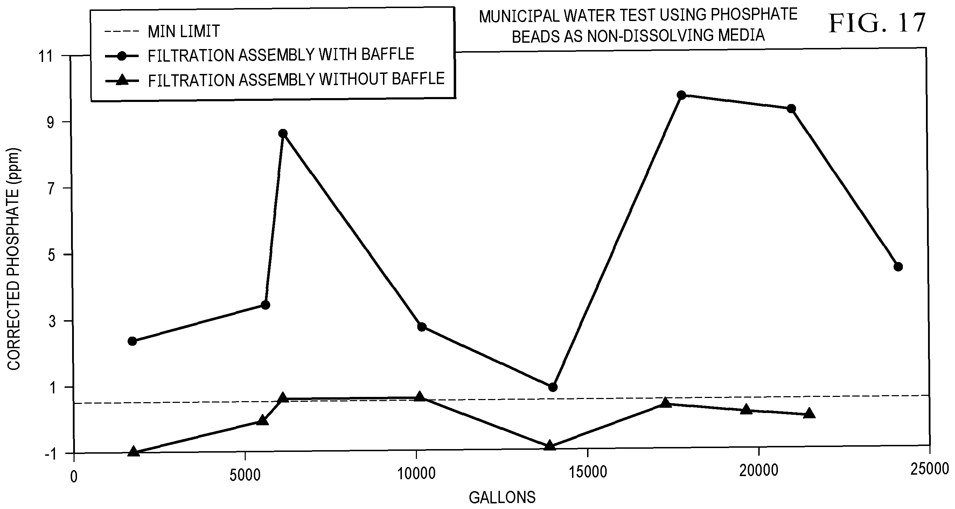

The graph provided in FIG. 17 demonstrates how, in one non-limiting example, the presence of the baffle 306 in a filtration assembly (e.g., the carbon block filtration assembly 300) may enhance scale prevention performance by optimizing flow dynamics through the non-dissolving media provided in the form of polyphosphate beads. In the experimental setup, municipally treated water from Hanover Park, IL was provided at substantially equivalent pressures and flow rates to a pair of carbon filtration assemblies that were plumbed in parallel. The pair of carbon filtration assemblies were substantially equivalent with the exception that one carbon filtration assembly included the baffle 306 within channel 320 while the other carbon filtration assembly lacked the baffle 306. The testing involved a duty cycle of 5 minutes on (water flowing) followed by 5 minutes off (no water flow) for 16 hours a day. During the remaining 8 hours of the day, no water flow was directed through either carbon filtration assembly. On weekends (Saturday/Sunday), the carbon filtration assemblies experienced a 48-hour dwell period. Following the dwell period, 1-Liter samples of the incoming municipally treated water and the initial effluent water from the carbon filtration assemblies were collected to measure phosphate concentrations dispensed from the carbon filtration assemblies. It is believed that samples following the 48-hour dwell period generally represent the maximum phosphate release and represent a best-case scenario with respect to scale prevention performance. The 1-Liter samples were prepared, digested, and analyzed using a HACH DR3900 spectrophotometer following the HACH TNT 843 and TNT 844 Test 'N Tube total phosphate procedures. The phosphate concentration of the incoming municipally treated water was subtracted from the effluent phosphate concentration values from each of the carbon filtration assemblies. The resulting values represented the amount of phosphate added by each carbon filtration assembly beyond what was present in the municipally treated water.

As represented in FIG. 17, a filtration assembly fabricated in accordance with the prior description of the carbon filtration assembly 300 and including the baffle 306 surprisingly releases significantly more phosphates (e.g., polyphosphates and/or orthophosphates measured in units of ppm) than a similar filtration assembly absent the baffle 306 on the same municipal water source. The measurement of phosphate released is an indication of polyphosphate scale control where mineral scale formation has been interfered with or otherwise inhibited by chemical and/or kinetic mechanisms as opposed to hardness removal from conventional stoichiometric softening. Without being bound to a particular theory, it is believed that the presence of the baffle 306 provides for advantageous flow dynamics within the channel of the carbon block, thereby optimizing the ion exchange performance of the phosphate beads and preventing plugging and/or channeling at the second end of the carbon block. Stated another way, without being bound to a particular theory, it is believed that the baffle 306 optimizes the manner in which water flows around and contacts the polyphosphate beads, thereby promoting the release of the scale-inhibiting compounds from the polyphosphate beads.

Various properties of the carbon filtration assembly 300 of FIGS. 3A-14 (e.g., geometries of the carbon block 302, the baffles 306, 1100, 1200, 1240, 1280) were described with reference to one or more values or one or more ranges of values. It is to be understood that each property described herein with reference to numerical values or ranges may be imparted with a discrete value, or a range of values, consistent with all values recited with reference to said property. In addition, each property described herein with reference to numerical values or ranges may be imparted with a discrete value, or a range of values, falling within any minimum and maximum value or range recited with reference to said property.

In a first implementation, a filter assembly is provided that includes a carbon block having a first end, a second end, and a channel extending from the first end to the second end, wherein the channel is imparted with a first diameter. The filter assembly also includes an end cap coupled to the second end of the carbon block and a flow distributor having a substantially cylindrical shape. The flow distributor is positioned within the channel and is imparted with a second diameter that is less than the first diameter of the channel. The flow distributor is designed to move between the first end and the second end of the carbon block within the channel.

In a second implementation, which may include the first implementation, a non-dissolving media is positioned in the channel between the flow distributor and the first end of the channel. The flow distributor is designed to substantially prevent movement of the non-dissolving media into the end cap.

In a third implementation, which may include the second implementation, the non-dissolving media is provided in the form of phosphate beads.

In a fourth implementation, which may include either the first or second implementation, a non-dissolving media is provided in the form of beads and is positioned in the channel. The non-dissolving media is imparted with a third diameter. One or more openings are provided in the flow distributor, each opening being imparted with a fourth diameter. The fourth diameter is smaller than the third diameter, such that the flow distributor retains the non-dissolving media within the channel.

In a fifth implementation, which may include the fourth implementation, the second diameter of the flow distributor is imparted with a first value of 1% to 99% of a second value of the first diameter of the channel, or 10% to 90% of the second value of the first diameter of the channel. In certain instances of the fifth implementation, the second diameter of the flow distributor is imparted with a first value of 70% to 95% of a second value of the first diameter of the channel.

In a sixth implementation, which may include either the fourth or fifth implementation, the second diameter is imparted with a first value that is no more than 90% of a second value of the first diameter.

In a seventh implementation, which may include any of the first through sixth implementations, the flow distributor includes a first flow distributor end and a second flow distributor end. The first flow distributor end is provided in the form of a first angled surface and a second angled surface, each of the first angled surface and the second angled surface being provided at an angle imparted with a value of 0° to 89.5°. In certain instances of the seventh implementation, the angle may be imparted with a value of 0° to 45°.

In an eighth implementation, which may include the seventh implementation, the flow distributor is positioned such that the first flow distributor end is positioned closer to the end cap than the second flow distributor end.

In a ninth implementation, which may include any of the first through eighth implementations, the end cap comprises a base and an opening. The base is coupled to the second end of the carbon block, and the opening is in fluid communication with the channel and an outlet of the filter assembly. Filtered water generated by the carbon block is provided to the opening of the end cap.

In a tenth implementation, which may include any of the first through ninth implementations, the filter assembly is provided in the form of a cartridge.

In an eleventh implementation, a water purification system is provided that includes a water filter comprising a body having a sidewall, a first end, and a second end, wherein the sidewall defines a channel that extends through the water filter from the first end to the second end. The water purification system also includes an end cap coupled to the second end of the water filter, a baffle positioned within the channel, and a non-dissolving media positioned within the channel between the first end and the baffle.

In a twelfth implementation, which may include the eleventh implementation, the baffle is imparted with a first diameter, and the channel is imparted with a second diameter that is larger than the first diameter. The first diameter and the second diameter define a gap between the baffle and the channel, and the gap is imparted with a value of 1 millimeter to 10 millimeters, or 2 millimeters to 8 millimeters.

In a thirteenth implementation, which may include either the eleventh or twelfth implementation, the baffle further includes a baffle sidewall having a first baffle end and a second baffle end, a bore defined by the baffle sidewall and extending through the baffle from the first baffle end to the second baffle end, and one or more openings positioned at the second baffle end of the baffle.

In a fourteenth implementation, which may include any of the eleventh through thirteenth implementations, the water filter is imparted with a first length, and the channel of the water filter is imparted with a first diameter. The baffle is imparted with a second length and a second diameter. The first length of the water filter is greater than the second length of the baffle, and the second length of the baffle is greater than a value of a square root of a difference of the first diameter of the channel and the second diameter of the baffle.

In a fifteenth implementation, which may include any of the eleventh through fourteenth implementations, the baffle includes one or more baffle openings designed to prevent the non-dissolving media from passing through the baffle.

In a sixteenth implementation, which may include any of the eleventh through fifteenth implementations, the baffle is imparted with a baffle radius having a first value and the channel is imparted with a channel radius having a second value, wherein the first value of the baffle radius is half of a baffle diameter of the baffle, and the second value of the channel radius is larger than the first value of the baffle radius. The baffle radius may be imparted with a first value of 1 millimeter to 30 millimeters, or 2 millimeters to 20 millimeters, and the channel radius may be imparted with a second value of 1 millimeter to 40 millimeters, or 3 millimeters to 30 millimeters.

In a seventeenth implementation, which may include the sixteenth implementation, the baffle radius is imparted with a first value of at least 1 millimeter, or at least 10 millimeters, or at least 20 millimeters, or no more than 50 millimeters, and the channel radius is imparted with a second value of at least 4 millimeters, or at least 10 millimeters, or at least 20 millimeters, or no more than 50 millimeters.

In an eighteenth implementation, which may include any of the eleventh through seventeenth implementations, a baffle gap is defined between an interior wall of the channel and the baffle when the baffle is positioned within the channel. The baffle gap is imparted with a third value that is greater than zero and is determined by subtracting the baffle radius from the channel radius when both the baffle and the channel are provided in substantially the same shape. The baffle gap may be imparted with a third value of 0.1 millimeters to 10 millimeters, or 1 millimeter to 8 millimeters.

In a nineteenth implementation, which may include the eighteenth implementation, the third value of the baffle gap is less than an average diameter of the non-dissolving media positioned within the channel, such that the baffle gap is sized to substantially prevent the non-dissolving media from passing between the baffle and the interior wall of the channel.

In a twentieth implementation, which may include any of the eleventh through nineteenth implementations, the non-dissolving media is imparted with a bead diameter having a fourth value of 0.1 millimeters to 10 millimeters, or 0.5 millimeters to 7 millimeters, and one or more baffle openings in the baffle are each imparted with an opening diameter having a fifth value that is substantially equal to or less than the fourth value of the bead diameter. The fifth value of the opening diameter is 1% to 99% of the fourth value of the bead diameter, or 10% to 90% of the fourth value of the bead diameter, or 15% to 70% of the fourth value of the bead diameter such that the non-dissolving media is substantially prevented from passing through the one or more baffle openings.

In a twenty-first implementation, which may include the twentieth implementation, the opening diameter is imparted with a fifth value of 0.1 millimeters to 10 millimeters, or 0.5 millimeters to 7 millimeters.

In a twenty-second implementation, which may include either the twentieth or twenty-first implementation, the non-dissolving media includes beads that are not uniform in size, and the opening diameter of the one or more baffle openings is imparted with a fifth value that is substantially equal to or less than a minimum bead diameter of the non-dissolving media. In some such instances, the fifth value of the opening diameter is 1% to 99% of the minimum bead diameter, or 10% to 90% of the minimum bead diameter.

In a twenty-third implementation, which may include any of the eleventh through twenty-second implementations, the baffle is imparted with a baffle length having a sixth value that is less than a block length of the water filter, wherein the sixth value of the baffle length is 5% to 75% of the block length, or 5% to 50% of the block length.

In a twenty-fourth implementation, which may include the twenty-third implementation, the block length of the water filter is imparted with a seventh value of 7 centimeters to 60 centimeters, or 10 centimeters to 45 centimeters.

In a twenty-fifth implementation, which may include either the twenty-third or twenty-fourth implementation, a minimum value of the baffle length is determined in relation to the channel radius such that the baffle is prevented from flipping within the channel or becoming lodged horizontally in the channel as water flows therethrough. In some such instances, a baffle diagonal of the baffle, measured as the linear distance between opposing corners of the baffle, is imparted with a value that is substantially equal to or greater than an inner diameter of the water filter defined by twice the channel radius.

In a twenty-sixth implementation, a method of purifying water is provided. The method includes placing a baffle into a channel of a carbon block, wherein the carbon block includes a first end and a second end. The method also includes adding a non-dissolving media into the channel and positioning the baffle downstream of the non-dissolving media. The method further includes directing water into the carbon block such that the water passes through the carbon block and into the channel, passing the water through the non-dissolving media to produce a filtered water, passing the filtered water through the baffle, and discharging the filtered water from the second end of the carbon block.

In a twenty-seventh implementation, which may include the twenty-sixth implementation, the non-dissolving media is provided in the form of phosphate beads, and passing water through the non-dissolving media results in removal and sequestration of calcium and magnesium ions from the water.

In a twenty-eighth implementation, which may include either the twenty-sixth or twenty-seventh implementation, the water includes a first concentration of phosphate ions and the filtered water includes a second concentration of phosphate ions, wherein the second concentration of phosphate ions is greater than the first concentration of phosphate ions.

In a twenty-ninth implementation, which may include any of the twenty-sixth through twenty-eighth implementations, the method further includes preventing the non-dissolving media from flowing out of the second end of the carbon block.

In a thirtieth implementation, which may include any of the twenty-sixth through twenty-ninth implementations, the method further includes filtering a component from the water, wherein the component is selected from the group consisting of heavy metals, hardness-imparting compounds or ions, chlorine, chlorine-containing compounds, dissolved particles, and combinations thereof.

In a thirty-first implementation, any of the twenty-sixth through thirtieth implementations may be used in conjunction with the filter assembly of any of the first through tenth implementations.

In a thirty-second implementation, any of the twenty-sixth through thirtieth implementations may be used in conjunction with the water purification system of any of the eleventh through twenty-fifth implementations.

It will be appreciated by those skilled in the art that while the above disclosure has been described above in connection with particular instances and examples, the above disclosure is not necessarily so limited, and that numerous other instances, examples, uses, modifications, and departures from the instances, examples, and uses are intended to be encompassed by the claims attached hereto. The entire disclosure of each patent and publication cited herein is incorporated by reference, as if each such patent or publication were individually incorporated by reference herein. Various features and advantages of the above disclosure are set forth in the following claims.

## Claims

1. A filter assembly comprising:
a carbon block including a first end, a second end, and a channel extending from the first end to the second end, wherein the channel is imparted with a first diameter;
an end cap coupled to the second end of the carbon block; and
a flow distributor having a substantially cylindrical shape, wherein the flow distributor is positioned in the channel and is imparted with a second diameter that is less than the first diameter of the channel,
wherein the flow distributor is configured to move between the first end and the second end of the carbon block within the channel.

2. The filter assembly of claim 1 further including a non-dissolving media positioned in the channel between the flow distributor and the first end of the channel, wherein the flow distributor is configured to substantially prevent movement of the non-dissolving media into the end cap.

3. The filter assembly of claim 2, wherein the non-dissolving media is provided in the form of phosphate beads.

4. The filter assembly of claims 1 or 2 further including a non-dissolving media provided in the form of beads and positioned in the channel, wherein:
the non-dissolving media is imparted with a third diameter,
one or more openings are provided in the flow distributor,
each opening of the one or more openings is imparted with a fourth diameter,
the fourth diameter is smaller than the third diameter.

5. The filter assembly of claim 4, wherein the second diameter is imparted with a first value that is 1% to 99% of a second value of the first diameter.

6. The filter assembly of claims 4 or 5, wherein the second diameter no more than 90% of the first diameter.

7. The filter assembly of any one of claims 1 to 6, wherein:
the flow distributor includes a first flow distributor end and a second flow distributor end,
the first flow distributor end is provided in the form of a first angled surface and a second angled surface,
the first angled surface and the second angled surface are each provided at an angle imparted with a value of 0° to 89.5°.

8. The filter assembly of any one of claims 1 to 7, wherein the flow distributor is positioned such that the first flow distributor end is positioned closer to the end cap than the second flow distributor end.

9. The filter assembly of any one of claims 1 to 8, wherein:
the end cap comprises a base and an opening,
the base is coupled to the second end of the carbon block,
the opening is in fluid communication with the channel and an outlet of the filter assembly,
filtered water generated by the carbon block is provided to the opening of the end cap.

10. The filter assembly of any one of claims 1 to 9, wherein the filter assembly is provided in the form of a cartridge.

11. A method of purifying water, the method comprising:
placing a baffle into a channel of a carbon block, wherein the carbon block includes a first end and a second end;
adding a non-dissolving media into the channel, and positioning the baffle downstream of the non-dissolving media;
directing water into the carbon block such that the water passes through the carbon block and into the channel;
passing water through the non-dissolving media to produce a filtered water;
passing the filtered water through the baffle; and
discharging the filtered water from the second end of the carbon block.

12. The method of claim 11, wherein the non-dissolving media is provided in the form of phosphate beads, and wherein passing water through the non-dissolving media results in sequestration of calcium and magnesium ions from the water.

13. The method of claims 11 or 12, wherein the water includes a first concentration of phosphate ions, the filtered water includes a second concentration of phosphate ions, and the second concentration of phosphate ions is greater than the first concentration of phosphate ions.

14. The method of any one of claims 11 to 13, the method further comprising:
preventing the non-dissolving media from flowing out of the second end of the carbon block.

15. The method of any one of claims 11 to 14, the method further comprising:
filtering a component from the water, the component selected from the group consisting of heavy metals, hardness-imparting compounds or ions, chlorine, chlorine-containing compounds, dissolved particles, and combinations thereof.
